(19) Europäisches Patentamt
European Patent Office
Office européen des brevets

(11) **EP 1 497 618 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(21) Anmeldenummer: **03727333.1**

(22) Anmeldetag: **22.04.2003**

(51) Int Cl.:
**G01C 21/34** *(2006.01)*    **G08G 1/09** *(2006.01)*
**G08G 1/0968** *(2006.01)*

(86) Internationale Anmeldenummer:
**PCT/EP2003/004160**

(87) Internationale Veröffentlichungsnummer:
**WO 2003/091663 (06.11.2003 Gazette 2003/45)**

(54) **VERFAHREN UND SYSTEM ZUR DYNAMISCHEN ZIELFÜHRUNG EINES FAHRZEUGES**

METHOD AND SYSTEM FOR DYNAMICALLY NAVIGATING A VEHICLE TO ITS DESTINATION

PROCEDE ET SYSTEME DE GUIDAGE DYNAMIQUE D'UN VEHICULE

(84) Benannte Vertragsstaaten:
**DE ES FR GB IT SE**

(30) Priorität: **25.04.2002 DE 10218636**

(43) Veröffentlichungstag der Anmeldung:
**19.01.2005 Patentblatt 2005/03**

(73) Patentinhaber: **Daimler AG**
**70327 Stuttgart (DE)**

(72) Erfinder:
• **ALEKSIC, Mario**
**78647 Trossingen (DE)**
• **DEMIR, Cesim**
**71134 Aidlingen (DE)**
• **KEPPLER, Martin**
**72160 Horb (DE)**
• **RICHTER, Werner**
**70180 Stuttgart (DE)**

(56) Entgegenhaltungen:
**EP-A- 0 715 289        WO-A-98/26253**
**US-A- 5 504 482        US-B1- 6 266 607**

**Beschreibung**

Die Erfindung betrifft ein Verfahren zur dynamischen Zielführung eines Fahrzeuges nach dem Oberbegriff des Patentanspruchs 1 sowie ein System zur dynamischen Zielführung eines Fahrzeuges nach dem Oberbegriff des Patentanspruchs 19.

Bei der dynamischen Zielführung eines Fahrzeuges wird die aktuelle und die voraussichtlich im Fahrtverlauf zum Fahrtziel eintretende zukünftige Verkehrslage bei der Auswahl einer Route zum Fahrtziel berücksichtigt. Dabei werden zum einen sogenannte 'On-Board-Verfahren' eingesetzt, bei denen die Bestimmung der Route zum Fahrtziel in einer fahrzeugseitigen Einrichtung erfolgt. Zum anderen werden 'Off-Board-Verfahren' verwendet, bei denen die Berechnung der Route in einer Verkehrszentrale erfolgt. Bei On-Board-Verfahren wird die für die Bestimmung der Route verwendete Verkehrslage der fahrzeugseitigen Einrichtung drahtlos verfügbar gemacht, bei Off-Board-Verfahren wird sie in der Verkehrszentrale vorgehalten und die berechnete Route wird drahtlos an in die fahrzeugseitige Einrichtung gesendet. Nachfolgend werden die der fahrzeugseitigen Einrichtung drahtlos verfügbar gemachten Daten, betreffend die Verkehrslage - beispielsweise Verkehrsstörungen - bzw. die berechnete Route, zusammenfassend als routenbezogene Daten bezeichnet.

In der DE 19547574 A1 wird vorgeschlagen, routenbezogene Daten von einer Verkehrszentrale drahtlos an eine fahrzeugseitige Einrichtung zu senden, wobei in der Verkehrszentrale und/ oder in der fahrzeugseitigen Einrichtung eine Simulation der Fahrt des Fahrzeuges in Echtzeit durchgeführt wird.

Die EP 0838797 A1 legt eine fahrzeugseitige Einrichtung dar, welche zum Empfang von routenbezogenen Daten eingerichtet ist. Mit vorgegebenem Ziel- und Startort des Fahrzeuges wird eine erste Route ohne Berücksichtigung routenbezogener Daten bestimmt. Weiterhin wird eine zweite Route mit Berücksichtigung empfangener routenbezogener Daten bestimmt, soweit die empfangenen routenbezogenen Daten die erste Route betreffen. Ist die voraussichtliche Fahrtzeit auf der zweiten Route kürzer als die voraussichtliche Fahrtzeit auf der ersten Route, so wird dem Fahrer eine Auswahlinformation ausgegeben. Die Auswahlinformation bietet die zweite Route als Alternativroute zur ersten Route an.

Die DE 19956108 A1 bildet den Gegenstand der EP 0838797 A1 weiter. Dazu wird in der DE 19956108 A1 vorgeschlagen, dass die fahrzeugseitige Einrichtung für den Fall, dass empfangene routenbezogene Daten die bestimmte erste Route betreffen, eine Mehrzahl von Routenbestimmungen für Alternativrouten durchführt. Dabei werden Alternativrouten für mehrere Abbiegepunkte bestimmt, an denen ein Verlassen der berechneten ersten Route möglich ist, und dem Fahrer eine entsprechende Auswahlinformation ausgegeben.

Die gattungsbildende EP 0974137 B1 legt ein Verfahren dar, bei dem eine fahrzeugseitige Einrichtung drahtlos routenbezogenen Daten von einer Verkehrszentrale empfängt. Wenn in der Verkehrszentrale eine Verkehrsstörung auf der berechneten Route detektiert wird, ermittelt die Verkehrszentrale eine neue Fahrtroute und sendet diese drahtlos an die fahrzeugseitige Einrichtung.

Aufgabe der vorliegenden Erfindung ist es, ein universelles Verfahren zur dynamischen Zielführung eines Fahrzeuges vorzuschlagen, welches für das Fahrzeug relevante Verkehrsstörungen berücksichtigt und kostengünstig stets für eine optimale Route sorgt. Ebenfalls Aufgabe der Erfindung ist es, ein entsprechendes System vorzuschlagen.

Die Erfindung löst diese Aufgabe bezüglich des Verfahrens mit den Merkmalen des Patentanspruchs 1 und bezüglich des Systems mit den Merkmalen des Patentanspruchs 19. Die Unteransprüche betreffen vorteilhafte Aus- und Weiterbildungen.

Erfindungsgemäß wird wenigstens eine nicht auf der berechneten Route lokalisierte Verkehrsstörung in der Verkehrszentrale überwacht und bei einer Verminderung dieser Verkehrsstörung wird die berechnete Route zumindest teilweise neu berechnet. Anders ausgedrückt betrifft die Erfindung beispielsweise den Fall, dass eine Alternativroute zur berechneten Route existiert, wobei die Alternativroute die "bessere" Route wäre, wenn auf ihr nicht eine Verkehrsstörung lokalisiert wäre. Dabei bedeutet "besser" beispielsweise kürzer oder kostengünstiger. Deshalb wird, wenn sich diese Verkehrsstörung vermindert, beispielsweise auflöst, die Route zumindest teilweise neu berechnet. Somit wird erfindungsgemäß stets eine für das Fahrzeug "beste" Route berechnet.

Während es bereits bekannt ist, eine berechnete Route daraufhin zu überwachen, ob dort eine Verkehrsstörung auftritt, wird hier der Fall von nicht auf der berechneten Route lokalisierten Verkehrsstörungen betrachtet. Erfindungsgemäß wird nur dann für das Fahrzeug eine neue Route berechnet, wenn eine solche Verkehrsstörung sich vermindert. Denn wenn beispielsweise eine solche Verkehrsstörung sich "verschlimmert", wird in keinem Fall eine Neuberechnung der Route zu einer anderen als der berechneten Route führen. Zusätzlich wird durch eine entsprechende Auswahl der zu überwachenden Verkehrsstörungen sichergestellt, dass nicht alle sondern nur "relevante" Verkehrsstörungen überwacht werden. Eine Verkehrsstörung ist beispielsweise "relevant" und wird somit überwacht, wenn sie auf einer möglichen alternativen Route zur berechneten Route lokalisiert ist. Somit stellt die Erfindung ein kostenoptimales Vorgehen bei der Realisierung einer dynamischen Zielführung eines Fahrzeugs unter Verwendung einer Verkehrszentrale sicher. Denn eine zumeist kostenbehaftete Versendung routenbezogener Daten wird nicht bei jeder Änderung der Verkehrslage bewirkt, sondern nur bei einer Verminderung einer überwachten Verkehrsstörung. Dabei ist das erfindungsgemäße Verfahren universell sowohl für On-Board-Zielführung als auch für Off-Board-Zielführung sowie für Mischformen (hybride Zielführung) einsetzbar. Zusätzlich wird sowohl bei der On-Board-Zielführung als auch bei der Off-Board-Zielführung der Rechenaufwand in der fahrzeugseitigen Einrichtung bzw. der Verkehrszentrale dadurch minimiert, dass nicht bei jeder Änderung der Verkehrslage eine Neubestimmung bzw. -berechnung der Route notwendig ist. Nur bei einer Verminderung einer überwachten Verkehrsstörung ist eine solche Neubestimmung bzw. Neuberechnung notwendig. Das erfindungsgemäße Verfahren sichert somit universell ein kostenoptimales Vorgehen.

Rechentechnisch einfach selektierbar werden die zu überwachenden, nicht auf der berechneten Route lokalisierten Verkehrsstörungen, wenn alle in einem vorgebbaren Gebiet um die berechnete Route lokalisierten Verkehrsstörungen überwacht werden. Das vorgebbare Gebiet um die berechnete Route kann beispielsweise in Form eines Korridors um die Route ausgeführt sein.

In einer besonders bevorzugten Ausführungsform wird für den Fall einer Änderung der neu berechneten Route gegenüber der berechneten Route von der Verkehrszentrale drahtlos eine Information an die fahrzeugseitige Einrichtung gesendet. Damit ist die fahrzeugseitige Einrichtung sofort über eine eventuelle Änderung informiert und der Fahrer des Fahrzeuges kann beispielsweise anschließend von der Verkehrszentrale drahtlos routenbezogene Daten anfordern. Dabei ist eine individuelle Betreuung des Fahrzeuges möglich, da die berechnete Route in der Verkehrszentrale gespeichert ist und somit in der Verkehrszentrale stets bekannt ist, auf welcher Route das Fahrzeug fährt. Da die fahrzeugseitige Einrichtung und/ oder der Fahrer des Fahrzeuges selbst die genaue Position des Fahrzeuges kennt, ist somit eine gezielte Entscheidung möglich, ob neue routenbezogene Daten von der Verkehrszentrale angefordert werden sollen. Die zumeist kostenbehaftete Versendung routenbezogener Daten wird fahrzeugseitig also nur dann initiiert, wenn sie für das Fahrzeug von Vorteil ist, und nicht bei jeder Änderung der neu berechneten Route. Dabei kann die von der Verkehrszentrale drahtlos gesendete Information auch Daten enthalten, ob die neu berechneten Route gegenüber der berechneten Route einen Vorteil, beispielsweise Zeitgewinn, liefert, und wie groß dieser Vorteil ist.

Vorteilhaft ist es, wenn die Verkehrszentrale zusätzlich zu routenbezogenen Daten wenigstens eine Routenänderungs-Ortsposition und wenigstens einen Änderungszeitpunkt zusammen mit der berechneten Route an die fahrzeugseitige Einrichtung sendet. Beispielsweise wird bei der Berechnung einer Route eine zukünftige Verkehrssituation unter Verwendung eines angenommen Fahrtverlaufs des Fahrzeuges abgeschätzt. Wenn nun das Fahrzeug einen anderen Fahrtverlauf als abgeschätzt aufweist, beispielsweise weil es einen Zwischenstop einlegt, kann die abzuschätzende Verkehrssituation sich geändert haben. Das wiederum würde zur Berechnung einer anderen Route führen. Wenn nun die Ortsposition und der Zeitpunkt der voraussichtlichen Änderung der berechneten Route in der fahrzeugseitigen Einrichtung vorliegt, ist fahrzeugseitig eine einfache (auch automatische) Entscheidung darüber möglich, ob neue, zumeist kostenpflichtige routenbezogene Daten von der Verkehrszentrale angefordert werden sollen. Dabei ist als Änderungszeitpunkt ein "Startzeitpunkt", ab dem eine berechnete Route "gilt", und/ oder ein "Endzeitpunkt", ab dem eine berechnete Route nicht mehr "gilt", vorgesehen. Zusätzlich oder alternativ kann vorgesehen sein, dass die Verkehrszentrale Informationen über den in der Verkehrszentrale angenommen Fahrtverlauf des Fahrzeug auf der berechneten Route an die fahrzeugseitige Einrichtung sendet. Der angenommene Fahrtverlauf wird beispielsweise als eine angenommene mittlere Fahrzeuggeschwindigkeit abgebildet. Ebenfalls zusätzlich kann vorgesehen sein, dass die Verkehrszentrale routenbezogene Daten betreffend eine neu berechnete Route ab der Routenänderungs-Ortsposition an die fahrzeugseitige Einrichtung sendet.

Mit Vorteil wird vorgeschlagen, dass die Route nur dann neu berechnet wird, wenn eine nicht auf der berechneten Route lokalisierte Verkehrsstörung sich um mehr als ein vorgebbares Maß vermindert. Durch die Verwendung eines derartigen Schwellwertes wird die Häufigkeit der Neuberechnung der Route vermindert, ohne größere Einbußen an Genauigkeit hinnehmen zu müssen.

In einer bevorzugten Realisierungsform der Erfindung sind die routenbezogenen Daten als Verkehrsdaten ausgebildet. Dies entspricht der Ausprägung der Erfindung als On-Board-Zielführung. Die Verkehrszentrale sendet dabei drahtlos Verkehrsdaten an die fahrzeugseitige Einrichtung und die fahrzeugseitige Einrichtung verwendet die empfangenen Verkehrsdaten zur dynamischen Zielführung des Fahrzeuges, indem unter Verwendung der Verkehrsdaten eine Route bestimmt wird. Beispielsweise werden die für das Fahrzeug "relevanten", d.h. die in der Verkehrszentrale überwachten, Verkehrsstörungen als Verkehrsdaten gesendet. Dabei kann vorgesehen sein, dass die Verkehrsdaten individuell für das Fahrzeug in der Verkehrszentrale zusammengestellt werden. Derart "individualisierte" Verkehrsdaten werden beispielsweise durch eine Übertragung der Fahrzeugposition bei der fahrzeugseitigen Anforderung der routenbezogenen Daten bewirkt. Insbesondere wenn bei einer Änderung der in der Verkehrszentrale neu berechneten Route gegenüber der berechneten Route drahtlos eine Information von der Verkehrszentrale an die fahrzeugseitige Einrichtung gesendet wird, können von der fahrzeugseitigen Einrichtung stets zeitnah aktuelle, individualisierte Verkehrsdaten angefordert werden.

In einer weiteren bevorzugten Realisierungsform der Erfindung sind die routenbezogenen Daten als Fahrtroutendaten ausgebildet. Dies entspricht der Ausprägung der Erfindung als Off-Board-Zielführung. Dabei wird in der Verkehrszentrale unter Verwendung beispielsweise der überwachten Verkehrsstörungen eine Route für das Fahrzeug berechnet und anschließend wird diese berechnete Route der fahrzeugseitigen Einrichtung drahtlos bereitgestellt.

Mit Vorteil wird vorgeschlagen, dass für den Fall der On-Board-Zielführung, d.h. wenn die routenbezogenen Daten als Verkehrsdaten ausgebildet sind, zusätzlich Information über den Verlauf einer berechneten bzw. bestimmten Route zwischen fahrzeugseitiger Einrichtung und Verkehrszentrale drahtlos übertragen wird. Beispielsweise wird unter Verwendung sogenannter Wegepunkte, d.h. von auf der berechneten bzw. bestimmten Route liegenden "Stützstellen", sichergestellt, dass Verkehrszentrale und fahrzeugseitige Einrichtung dieselbe Route berechnen bzw. bestimmen. Dafür wählt die fahrzeugseitige Einrichtung bzw. die Verkehrszentrale geeignete auf der Route liegende Punkte aus und überträgt sie, beispielsweise jeweils zusammen mit der Anforderung bzw. Versendung von routenbezogenen Daten. Zusätzlich kann vorgesehen sein, dass bei fehlender Übereinstimmung zwischen der in der fahrzeugseitigen Einrichtung bestimmten Route und der in der Verkehrszentrale berechneten Route drahtlos eine entsprechende Information gesendet wird. Die Übereinstimmung wird dabei geprüft, indem beispielsweise in der fahrzeugseitigen Einrichtung unter Verwendung der Information über den Verlauf der in der Verkehrszentrale berechneten Route diese Route rekonstruiert und mit der in der fahrzeugseitigen Einrichtung selbst bestimmten Route verglichen wird. Somit wird sichergestellt, dass die in der fahrzeugseitigen Einrichtung bestimmte Route und die in der Verkehrszentrale berechneten Route selbst dann übereinstimmen, wenn jeweils verschiedene Matching- und/ oder Routingverfahren und/ oder Datenbasen (digitale Straßenkarten) verwendet werden. Alternativ oder zusätzlich ist vorgesehen, in der Verkehrszentrale unter Verwendung der Information über den Verlauf der in der fahrzeugseitigen Einrichtung berechneten Route diese Route zu rekonstruieren und mit der in der Verkehrszentrale selbst bestimmten Route zu vergleichen. Dabei ist auch die Verwendung (beispielsweise zur Selektion zu überwachender Verkehrsstörungen) einer derart rekonstruierten Route in der Verkehrszentrale möglich, wenn die rekonstruierte Route nicht mit der in der Verkehrszentrale selbst bestimmten Route übereinstimmt.

Ebenfalls vorteilhaft bei der On-Board-Zielführung ist es, zusätzlich Information über das vorgebbare Gebiet zwischen fahrzeugseitiger Einrichtung und Verkehrszentrale zu übertragen. Beispielsweise kann die fahrzeugseitige Einrichtung von der Verkehrszentrale ein bestimmtes vorgebbares Gebiet abfragen und so über die in diesem Gebiet lokalisierten Verkehrsstörungen informiert werden oder die Verkehrszentrale informiert die fahrzeugseitige Einrichtung über die Größe des vorgegebenen Gebietes. Hierdurch wird zuverlässig für eine bestmögliche Betreuung des Fahrzeugs mit geringstem Kostenaufwand gesorgt. So werden beispielsweise beim Verlassen der Route, bei der Wahl eines neuen Fahrtziels oder beim Ansteuern eines Zwischenziels durch das Fahrzeug nur dann neue Verkehrsdaten von der Verkehrszentrale angefordert, wenn ein Teil der neuen Route außerhalb des vorgebbaren Gebiets liegt, d.h. in einem Bereich ohne routenbezogene Daten. Diese Anforderung kann manuell durch den Fahrer oder automatisiert erfolgen. Mit anderen Worten wird so durch die Information über das vorgebbare Gebiet in der fahrzeugseitigen Einrichtung bei einer Routenänderung durch das Fahrzeug, welche innerhalb des vorgebbaren Gebietes stattfindet, sichergestellt, dass auch für die neue Route routenbezogene Daten in der fahrzeugseitiger Einrichtung vorliegen.

Eine Neuberechnung der Route in der Verkehrszentrale wird vereinfacht, wenn nur der Teil der berechneten Route neu berechnet wird, den das Fahrzeug unter Annahme einer Mindestgeschwindigkeit noch nicht durchfahren hat. Eine solche Mindestgeschwindigkeit kann beispielsweise aus entsprechenden Datenbanken ausgelesen werden. Besonders vorteilhaft ist es, wenn drei Neuberechnungen der Route unter Verwendung von drei verschiedenen Durchschnittsgeschwindigkeiten des Fahrzeugs auf seiner Route durchgeführt werden. Diese drei Durchschnittsgeschwindigkeiten entsprechen einer statistisch langsamsten, schnellsten und durchschnittlichen Fahrweise. Solche statistischen Daten werden beispielsweise aus historischen Quelle-Ziel-Beziehungen, die mit Reisezeitangaben versehen gespeichert worden sind, gewonnen. Somit wird berücksichtigt, dass die exakte Position des Fahrzeuges in der Verkehrszentrale nicht bekannt ist. Diese drei Neuberechnungen ermöglichen nämlich in optimaler Weise eine Berücksichtigung von 'Entscheidungspunkten', an denen das Fahrzeug die vorberechnete Route verlassen kann, um auf die neu berechnete Route zu wechseln. Durch die Verwendung von drei verschiedenen Durchschnittsgeschwindigkeiten sind alle praktischen Anwendungsfälle betreffend die Position des Fahrzeug abgedeckt. Beispielsweise wird für den Fall einer Änderung der neu berechneten Route gegenüber der berechneten Route von der Verkehrszentrale drahtlos eine Information an die fahrzeugseitige Einrichtung gesendet, umfassend Entscheidungspunkte. Durch einen Vergleich der aktuellen Fahrzeugposition mit den Entscheidungspunkten ist die Auswahl des für das Fahrzeug besten, d.h. auf seiner Route nächstliegenden, Entscheidungspunktes möglich.

Mit Vorteil wird vorgeschlagen, dass die oder jede Verkehrsstörung mindestens für eine verkehrszentralenseitig abgeschätzte Fahrtzielerreichungszeitdauer des Fahrzeugs überwacht wird. Dies stellt in besonders einfacher Weise sicher, dass das Fahrzeug während der gesamten Fahrtdauer optimal betreut wird. Die Fahrtzielerreichungszeitdauer kann beispielsweise unter Verwendung einer Mindestgeschwindigkeit abgeschätzt werden.

Vorteilhaft ist die zusätzliche drahtlose Übertragung einer fahrzeugseitig bestimmten, beispielsweise geschätzten, Fahrtzielankunftszeit von der fahrzeugseitigen Einrichtung an die Verkehrszentrale. Dies ermöglicht eine zuverlässige Bestimmung, für welchen Zeitraum die oder jede Verkehrsstörung in der Verkehrszentrale überwacht wird. Beispielsweise überträgt die fahrzeugseitige Einrichtung dafür zusammen mit der Anforderung von routenbezogenen Daten eine entsprechende Information an die Verkehrszentrale. Wenn die Fahrtzielankunftszeit erreicht ist, wird die Überwachung der oder jeder Verkehrsstörung in der Verkehrszentrale beendet. Zusätzlich kann die Fahrtzielankunftszeit auch im Fahrzeug abgespeichert werden. Wenn dann im Fahrzeug die Fahrtzielankunftszeit in bestimmten Zeitabständen aktualisiert wird, kann bei Überschreitung einer vorgebbaren Abweichung zwischen aktualisierter und abgespeicherter Fahrtzielankunftszeit die aktualisierte Fahrtzielankunftszeit an die Verkehrszentrale übertragen werden. Somit wird der Zeitraum der Überwachung der oder jeder Verkehrsstörung in der Verkehrszentrale genau an den Fahrtverlauf des Fahrzeuges angepasst. Somit wird berücksichtigt, wenn beispielsweise das Fahrzeug mehr (z.B. wenn das Fahrzeug langsamer als abgeschätzt unterwegs ist oder wenn es eine Fahrtunterbrechung einlegt) oder weniger (z.B. wenn das Fahrzeug schneller als abgeschätzt unterwegs ist) als die vorgebbare Abweichung benötigt um sein Fahrtziel zu erreichen. Alternativ oder zusätzlich ist vorgesehen, dass von der fahrzeugseitigen Einrichtung bei der Feststellung einer solchen Abweichung die aktuelle Fahrzeugposition an die Verkehrszentrale gesendet wird. Als weitere Alternative oder zusätzlich ist vorgesehen, dass die fahrzeugseitige Einrichtung nach dem Empfang routenbezogener Daten von der Verkehrszentrale automatisiert eine Rückmeldung an die Verkehrszentrale senden kann. Hierdurch wird zuverlässig sichergestellt, dass die Überwachung in der Verkehrszentrale beendet wird, wenn das Fahrzeug sein Fahrtziel erreicht und/ oder wenn die Zielführung abgebrochen wird, da dann die fahrzeugseitige Einrichtung keine solche Rückmeldung senden wird. Um der Möglichkeit Rechnung zu tragen, dass die drahtlose Verbindung zwischen fahrzeugseitiger Einrichtung und Verkehrszentrale kurzzeitig nicht verfügbar ist, kann vorgesehen sein, dass die Verkehrszentrale für einen gewissen Zeitraum nach der Versendung routenbezogener Daten an das Fahrzeug auf diese Rückmeldung wartet, bevor die Überwachung der oder jeder Verkehrsstörung beendet wird.

Besonders vorteilhaft ist es, wenn zur Bestimmung zu überwachender Verkehrsstörungen in einem ersten Schritt eine Route $R_1$ ohne Berücksichtigung von Verkehrsstörungen zum Fahrtziel berechnet wird, in einem zweiten Schritt eine Route $R_A$ unter Berücksichtigung aller Verkehrsstörungen zum Fahrtziel berechnet wird, in einem dritten Schritt alle Verkehrsstörungen auf $R_1$ überwacht werden und unter Berücksichtigung nur der bereits überwachten Verkehrsstörungen eine Route $R_2$ zum Fahrtziel berechnet wird, in einem vierten Schritt alle Verkehrsstörungen auf der zuvor berechneten Route $R_i$, $i \geq 2$, überwacht werden und eine Route $R_{i+1}$ unter Berücksichtigung der überwachten Verkehrsstörungen zum Fahrtziel berechnet wird und der vierte Schritt so lange wiederholt wird, bis die Route $R_i$ der Route $R_A$ entspricht und bereits in einem vorherigen Schritt alle gegebenenfalls existierenden Verkehrsstörungen auf $R_A$ überwacht werden. Mit diesem Vorgehen werden zum einen nur solche Verkehrsstörungen ermittelt, die auf Routen lokalisiert sind welche bei einer Neuberechnung eine neue Route für das Fahrzeug sein können. Zum anderen werden nur solche Verkehrsstörungen überwacht, bei deren Verkleinerung oder Auflösung sich bei einer Neuberechnung der Route eine geänderte Route ergeben könnte. Es werden also nur "relevante" Verkehrsstörungen auf "relevanten" Routen (d.h. Alternativrouten) überwacht. Dabei sind Alternativrouten solche Routen, die bei Auflösung einer oder mehrerer Verkehrsstörungen als neue Route für das Fahrzeug berechnet werden könnten.

Der erste Vorteil folgt daraus, dass in jedem Schritt Routen berechnet werden, die unter Berücksichtigung eines Teils der tatsächlich vorhandenen Verkehrsstörungen "optimal" sind. Anders gesagt wären diese Routen dann optimal, wenn sich nicht überwachte Verkehrsstörungen auflösen würden. Da nur Verkehrsstörungen auf den so berechneten Routen überwacht werden, ergibt sich gerade der erste Vorteil. Der zweite Vorteil wird durch einen Widerspruchsbeweis nachgewiesen. Angenommen, es gäbe eine Route $R_x$, auf der sich eine oder mehrere Störungen S1, ..., Sn befinden, die nicht durch das beschriebene Verfahren überwacht werden. Und weiter angenommen, diese Route $R_x$ wäre bei Auflösung der Störungen S1, ..., Sn besser als die unter Berücksichtigung aller Verkehrsstörungen berechnete Route $R_A$. Da es darum geht, ob die Verkehrsstörungen S1, ..., Sn für die Erkennung einer Änderung der optimalen Route überwacht werden müssen, deckt die Annahme der vollständigen Auflösung aller Verkehrsstörungen auch alle anderen Fälle ab. Eine Auflösung ist die weitestgehende Änderung, die unerkannt bleiben würde, wenn die Verkehrsstörungen nicht überwacht werden. Laut Annahme werden S1, ..., Sn nicht überwacht und werden somit nicht bei der Bestimmung der Route berücksichtigt. Das entspricht für die Routenberechnung dem Fall, dass alle Verkehrsstörungen aufgelöst sind. Da in dieser Situation aber Route $R_x$ besser als $R_A$ wird, wird dann auch Route $R_x$ als eine optimale Route $R_i$ bestimmt, bevor ein Abbruchkriterium erreicht wird. Dann werden laut Verfahren aber alle Störungen S1, ..., Sn als zu überwachen markiert, was ein Widerspruch zur Annahme ist.

Üblicherweise sind nur wenige Verkehrsstörungen zu überwachen, so dass der Aufwand in der Verkehrszentrale zur Berechnung der Route zum Fahrtziel nur einen geringen Rechenaufwand erfordert. Um aber zuverlässig zu verhindern, dass der Rechenaufwand zu groß wird, wird mit Vorteil vorgeschlagen, dass die Anzahl der zu berechnenden Routen $R_i$ auf einen vorgebbaren Maximalwert n begrenzt wird. Somit werden mit minimiertem Rechenaufwand die wichtigsten Verkehrsstörungen überwacht. Eine vorteilhafte Weiterbildung ergibt sich dadurch, dass weitere Routen $R_i$ berechnet werden, beispielsweise zu einem späteren Zeitpunkt. Beispielsweise werden die weiteren Routen $R_i$ dann berechnet, wenn die Rechenbelastung der Verkehrszentrale gering ist. Somit wird zu Spitzenzeiten eine Überlastung der Verkehrszentrale verhindert, es werden aber dennoch alle Verkehrsstörungen überwacht.

Die Erfindung ist vorzugsweise als Computerprogramm mit Programmcode-Mitteln realisiert, wobei eine jeweilige Ausprägung des erfindungsgemäßen Verfahrens durchgeführt wird, wenn das jeweilige Programm auf einem Computer ausgeführt wird.

Eine weitere bevorzugte Realisierungsform der Erfindung stellt ein Computerprogrammprodukt mit Programmcode-Mitteln dar, wobei die Programmcode-Mittel die auf einem computerlesbaren Datenträger gespeichert sind, um eine jeweilige Ausprägung des erfindungsgemäßen Verfahrens durchzuführen, wenn das jeweilige Programmprodukt auf einem Computer ausgeführt wird.

Nachfolgend wird die Erfindung anhand von Zeichnungen näher erläutert. Dabei zeigen:

Fig. 1        schematisch verschiedene Verkehrsstörungen bei einer dynamischen Zielführung,

Fig. 2 a, b, c, d, e, f    Schritte einer bevorzugten Ausführungsform des erfindungsgemäßen Verfahrens bei der Selektion zu überwachender Verkehrsstörungen,

Fig. 3        eine Festlegung von Grenzkosten einer Störung,

Fig. 4        Entscheidungspunkte auf einer berechneten Route,

Fig. 5        Entscheidungspunkte auf einer wegen einer Verkleinerung einer Verkehrsstörung neu berechneten Route,

Fig. 6        Bestimmung von Entscheidungspunkten durch Berechnung eines "kürzeste-Wege-Baumes",

Fig. 7 a, b, c    Ermittelung der Entscheidungspunkte durch eine Abfolge mehrerer Routenberechnungen,

Fig. 8 a, b    Unterschiede zwischen Berechnung des "kürzesteWege-Baums" und separaten Teilroutenberechnungen,

Fig. 9        Verwendung von Entscheidungspunkten im Zusammenhang mit Fahrzeugpositionen,

Fig. 10       eine Verwendung von Information über das vorgebbare Gebiet,

Fig. 11       Verwendung einer fahrzeugseitig bestimmten FahrtzielAnkunftszeit,

Fig. 12 a, b, c    schematisch die Verwendung einer Routenänderungs-Ortsposition mit Änderungszeitpunkt einer berechneten Route,

Fig. 13a, b, c    den Einsatz von Routenänderungs-Ortspositionen mit Änderungszeitpunkten einer berechneten Route,

Fig. 14       welche Daten bezüglich Routenänderungs-Ortspositionen von der Verkehrszentrale zur fahrzeugseitigen Einrichtung übertragen werden.

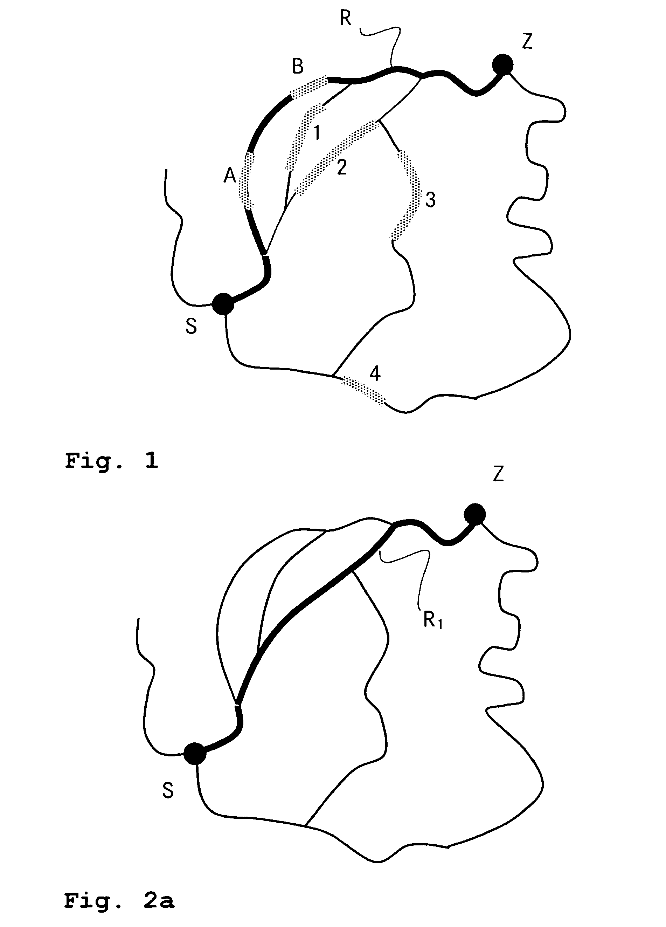

In Fig. 1 sind schematisch verschiedene Verkehrsstörungen bei einer dynamischen Zielführung von einem Startort S zu einem Zielort Z dargestellt. Herkömmlicherweise werden auf einer für ein Fahrzeug berechneten Route R lokalisierte Verkehrsstörungen A, B überwacht. Eine Neuberechnung der Route wird dabei bei einer Verschlechterung der Verkehrslage auf dieser Route durchgeführt, d.h. entweder bei einer "Verschlimmerung" von A und/ oder B und/ oder bei Entstehung einer neuen Verkehrsstörung; bei einer Verbesserung der Verkehrslage auf der berechneten Route wird dagegen keine Neuberechnung durchgeführt.

Neuartigerweise werden nun zusätzlich nicht auf der berechneten Route R lokalisierte "relevante" Verkehrsstörungen überwacht. Dabei bedeutet "relevant", dass eine Verkleinerung oder Auflösung der Verkehrsstörung zu einer anderen Route führen könnte. Nicht auf der berechneten Route R lokalisiert sind in Fig. 1 die Verkehrsstörungen 1, 2, 3, 4. Die Verkehrsstörungen 1, 2, 3, 4 sind auf alternativen Routen vom Startort S zum Zielort Z lokalisiert. Wenn sich eine der Verkehrsstörungen 1, 2, 3 verkleinern oder auflösen würde - und die Verkehrsstörungen auf der berechneten Route R unverändert bleiben würden - würde die entsprechende Alternativ-Route "besser" sein. Deshalb sind die Verkehrsstörungen 1, 2, 3 "relevant" und werden überwacht. Verkehrsstörung 4 liegt dagegen auf einer solchen Strecke, die nur über einen sehr weiten Umweg zum Zielort Z führt. Selbst wenn sich Verkehrsstörung 4 auflösen würde, würde sich keine bessere Alternative zur berechneten Route R ergeben. Verkehrsstörung 4 ist daher nicht relevant und wird nicht überwacht. Zu beachten ist, dass eine Änderung der berechneten Route durch eine Verschlechterung der Verkehrslage außerhalb der berechneten Route R (d.h. durch eine Vergrößerung einer oder mehrere Verkehrsstörungen 1, 2, 3, 4 und/ oder das Entstehen einer neuen Verkehrsstörung) nicht möglich ist.

Noch angemerkt sei dass in Fig. 1, bei entsprechender Wahl des vorgebbaren Gebietes innerhalb dessen Verkehrsstörungen überwacht werden, zusätzlich zu den "relevanten" Verkehrsstörungen 1, 2, 3 auch Verkehrsstörung 4 als relevant betrachtet werden könnte. Obwohl eine Verkleinerung oder Auflösung dieser Verkehrsstörung 4 nicht zu einer Änderung der Route führen wird, würde in diesem Fall die Route neu berechnet. Jedoch würde die Verkehrszentrale keine Information an die fahrzeugseitige Einrichtung senden, da die neu berechnete Route ja der (vorher berechneten) Route R entspricht. Bei "großzügiger" Wahl des vorgebbaren Gebietes steht somit der niedrige Rechenaufwand bei der ursprünglichen Routenanfrage der fahrzeugseitigen Einrichtung, bei der Bestimmung "relevanter" Verkehrsstörungen, einem höheren Rechenaufwand bei Verbesserung der Verkehrslage, mit größerer Anzahl zu berücksichtigender Verkehrsstörungen bei einer Neuberechnung der Route, gegenüber. Durch die Wahl eines kleineren Gebietes kann der Rechenaufwand bei der Neuberechnung der Route verringert werden, jedoch werden eventuell "relevante" Verkehrsstörungen als "nicht relevant" betrachtet. In jedem Fall wird dabei eine Neuberechnung der Route bei einer Verbesserung der Verkehrslage um ein vorgegebenes Maß durchgeführt.

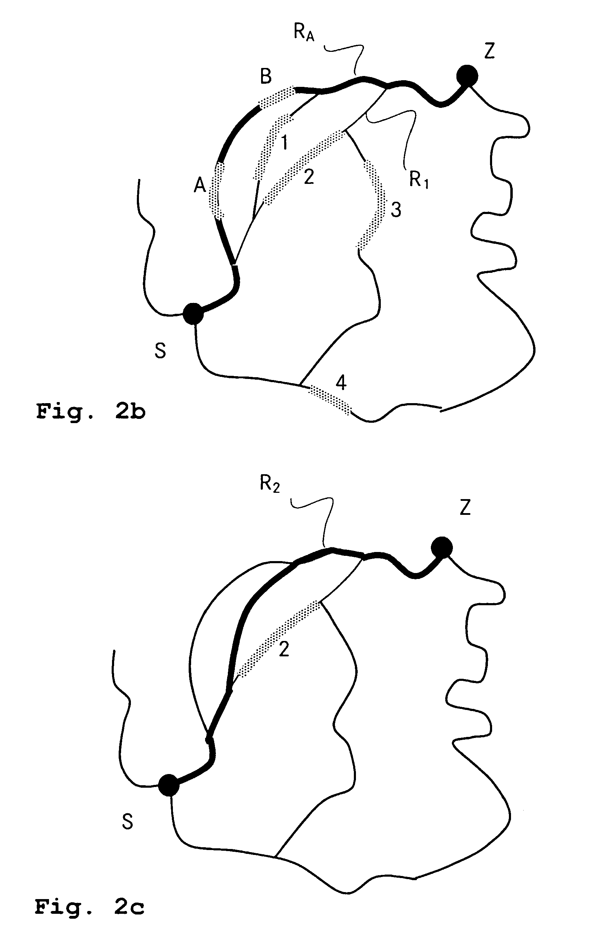

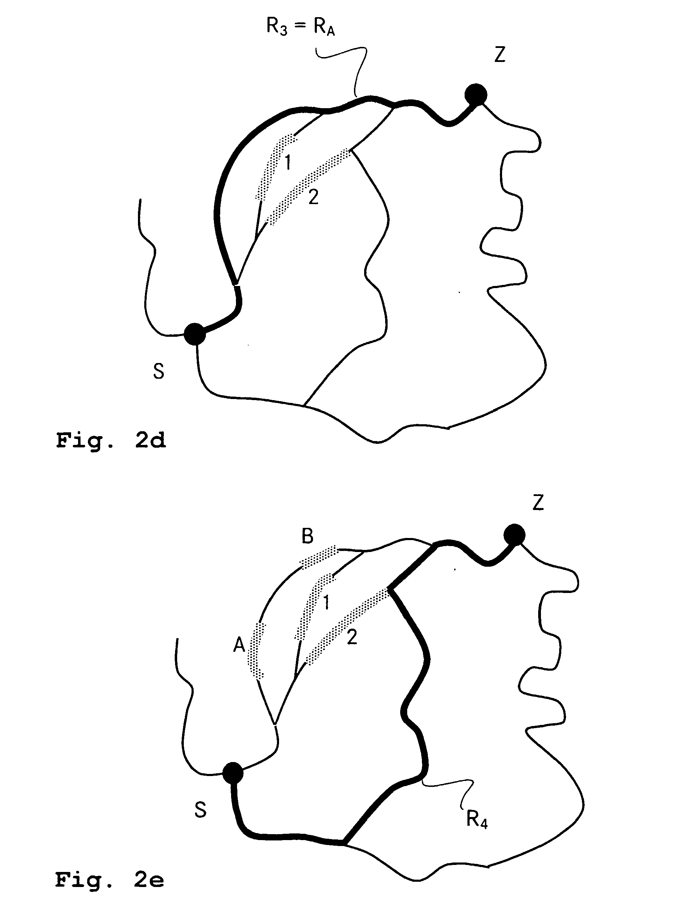

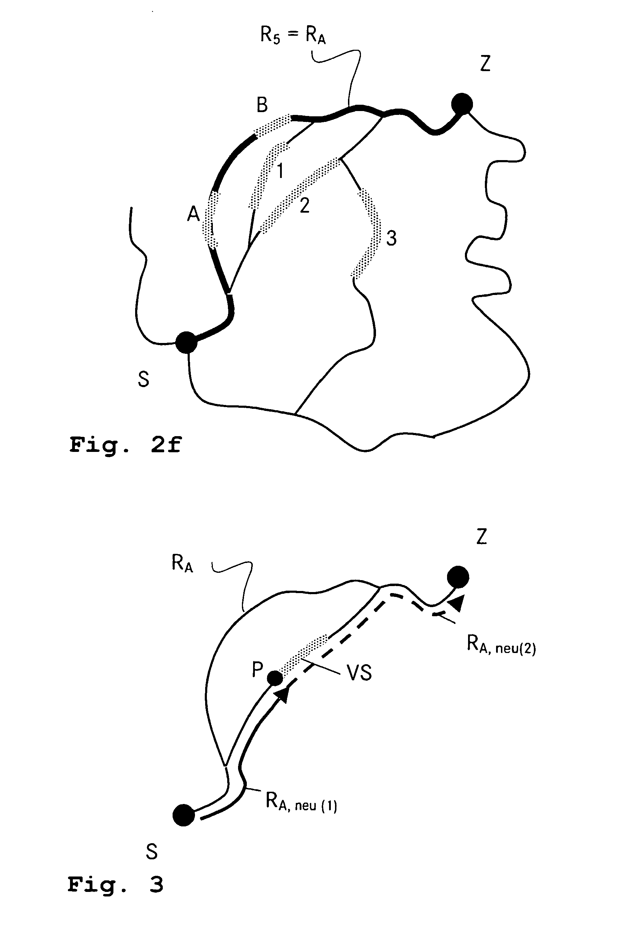

Fig. 2 zeigt Schritte einer bevorzugten Ausführungsform des erfindungsgemäßen Verfahrens bei der Selektion zu überwachender Verkehrsstörungen. Dabei zeigt Fig. 2a die Berechnung der optimalen Route $R_1$ ohne Berücksichtigung von Verkehrsstörungen (erster Schritt), Fig. 2b die Berechnung der Route $R_A$ mit Berücksichtigung aller Verkehrsstörungen (zweiter Schritt), Fig. 2c die Selektion der Verkehrsstörung 2 auf $R_1$ als "relevant" und Berechnung von Route $R_2$ unter Berücksichtigung dieser Verkehrsstörung (dritter Schritt), Fig. 2d die Selektion der Verkehrsstörung 1 und Berechnung von Route $R_3$, wobei die Route $R_3$ der Route $R_A$ entspricht (vierter Schritt; da noch nicht alle Verkehrsstörungen auf $R_A$ markiert worden sind, müssen weitere Routenberechnungen erfolgen), Fig. 2e die Selektion von Verkehrsstörungen A und B und Berechnung von Route $R_4$ (erste Wiederholung vierter Schritt) und Fig. 2f die Selektion von Verkehrsstörung 3 und Berechnung von Route $R_5$, wobei die Route $R_5$ der Route $R_A$ entspricht (zweite Wiederholung vierter Schritt, da bereits in einem früheren Schritt Verkehrsstörungen A und B markiert wurden, wird hier abgebrochen).

Aus Fig. 3 ist eine Festlegung von Grenzkosten G(VS)einer Verkehrsstörung VS abzulesen. Dargestellt sind eine Teilroute $R_{A, neu (1)}$ vom Startort S zum Beginn der Verkehrsstörung VS (der Ortsposition P), eine Teilroute $R_{A, neu (2)}$ vom Beginn der Verkehrsstörung VS (der Ortsposition P) zum Zielort Z, eine berechnete Route $R_A$ und die Verkehrsstörung VS.

Jeder als "relevant" erkannter Verkehrsstörung VS werden Kosten K(VS) zugeordnet, die z.B. den verursachten Zeitverlust beinhalten. Außerdem werden Grenzkosten G(VS) ermittelt, bei deren Unterschreitung eine Änderung der berechneten Route möglich ist. Die Grenzkosten G(VS) werden dabei so gewählt, dass im Falle der Änderung der berechneten Route bei irgendeiner Verkehrsstörung VS die Grenzkosten unterschritten werden. Umgekehrt kann es vorkommen, dass die Grenzkosten bei einer Verkehrsstörung unterschritten werden, obwohl die neu berechnete Route unverändert, d.h. die gleiche wie die bereits berechnete Route, bleibt.

Zur Herleitung der angegebenen Grenzkosten G(VS) wird die Verkehrsstörung VS betrachtet, deren Kosten auf einen niedrigeren Wert $K_{neu}$ (VS) sinken und dadurch eine Änderung der berechneten Route bewirken. Alle anderen "relevanten" Verkehrsstörungen bleiben unverändert. Nun ist die Reisezeit entlang der neu berechneten Route $R_{A, neu}$ gesucht. Da die neu berechnete Route nach Voraussetzung durch die Verkleinerung der Verkehrsstörung VS verursacht wurde, muss $R_{A, neu}$ durch VS verlaufen. Die Route $R_{A, neu}$ besteht also aus einem Anteil $R_{A, neu (1)}$, der vom Startort S bis zum Beginn der Verkehrsstörung VS an der Ortsposition P verläuft und einen Teil $R_{A, neu (2)}$, der von der Ortsposition P durch die Störung S zum Zielort Z verläuft. Dazu wird angenommen, dass entlang des Streckenabschnitts, der durch die Verkehrsstörung VS belegt wird, nicht von der Strecke abgebogen werden kann. Wäre dies der Fall, würde $R_{A, neu}$ nicht unbedingt durch die gesamte Verkehrsstörung VS laufen und die hier betrachteten Grenzkosten würden keine Erkennung einer Änderung der berechneten Route sicherstellen.

Bei der ursprünglichen Routenanfrage wurde die Verkehrsstörung VS als "relevant" selektiert, als eine Route $R_i$ vom Startort S zum Zielort Z berechnet wurde, auf der die Verkehrsstörung VS lokalisiert ist. $R_i$ besteht aus einem Teil $R_{i(1)}$ vom Startort S zur Ortsposition P und einem Teil $R_{i(2)}$ von P zum Zielort Z. $R_i$ ist "optimal" unter der Bedingung, dass nur die zum Zeitpunkt der Berechnung von $R_i$ als "relevant" selektierten Verkehrsstörungen berücksichtigt werden. Da $R_i$ dann "optimal" ist, sind unter dieser Bedingung auch $R_{i(1)}$ und $R_{i(2)}$ "optimal". Die Reisezeit auf $R_i$, bei der ebenfalls nur die bereits selektierten Verkehrsstörungen berücksichtigt werden, wird mit $t^*(R_i)$ bezeichnet, entsprechendes gilt für die Reisezeiten der Teilrouten $R_{i(1)}$ und $R_{i(2)}$. Zu beachten ist dabei dass auch die Verkehrsstörung VS selbst zum Zeitpunkt der Berechnung von $R_i$ noch nicht als "relevant" markiert ist. Die unter Berücksichtigung aller Verkehrsstörungen "optimale" Teilroute $R_{A,neu(1)}$ kann eine größere oder die gleiche Reisezeit haben wie $t^*(R_{i(1)})$, wo nur ein Teil aller Verkehrsstörung berücksichtigt wurden. Da sowohl $R_{A,neu(2)}$ als auch $R_{i(2)}$ durch die Verkehrsstörung VS laufen und die Kosten von VS in $t^*(R_{i(2)})$ nicht enthalten sind, kann $R_{A,neu(2)}$ nur eine größere oder die gleiche Reisezeit haben wie die um die Kosten der Verkehrsstörung VS erhöhte Reisezeit von $R_{i(2)}$:

$$t^*\left(R_{i(2)}\right) + K_{neu}\left(VS\right).$$

Es gilt also:

$$t^*\left(R_{i(1)}\right) \le t\left(R_{A, neu(1)}\right)$$

und

$$t^*\left(R_{i(2)}\right) + K_{neu}\left(VS\right) \le t\left(R_{A,neu(2)}\right),$$

damit gilt auch:

$$t^{\bullet}(R_i) + K_{neu}(VS) \le t(R_{A,neu}).$$

Da $R_{A,neu}$ nach Voraussetzung günstiger ist als die ursprünglich berechnete Route $R_A$ gilt außerdem:

$$t(R_{A,neu}) < t(R_A)$$

und damit

$$t^{\bullet}(R_i) + K_{neu}(VS) < t(R_A) \quad \text{bzw.} \quad K_{neu}(VS) < t(R_A) - t^{\bullet}(R_i).$$

Deshalb werden die Grenzkosten $G(VS)=t(R_A)-t^*(R_i)$ gewählt. Dieser Wert kann während der Bestimmung "relevanter" Verkehrsstörungen bei der ursprünglichen Routenanfrage berechnet werden und dessen Unterschreitung kann bei jeder Änderung der Verkehrslage leicht überprüft werden.

Um auch bei Verkehrsstörungen, die sich über mehrere aufeinanderfolgende Streckenabschnitte erstrecken, sicherzustellen, dass eine Änderung der "optimalen" Route erkannt wird, können solche Verkehrsstörungen in je einen Anteil pro betroffenen Streckenabschnitt aufgeteilt werden. Mit anderen Worten können Verkehrsstörungen VS, die über mehrere Streckenabschnitte $k_1, ... k_n$ verlaufen, in mehrere Verkehrsstörungen $S_1, ... S_n$ aufgeteilt werden, die jeweils als eigenständige Verkehrsstörung betrachtet werden, wobei jede Verkehrsstörung $S_i$ den Anteil der Verkehrsstörung S beinhaltet, der sich auf Streckenabschnitt $k_i$ befindet.

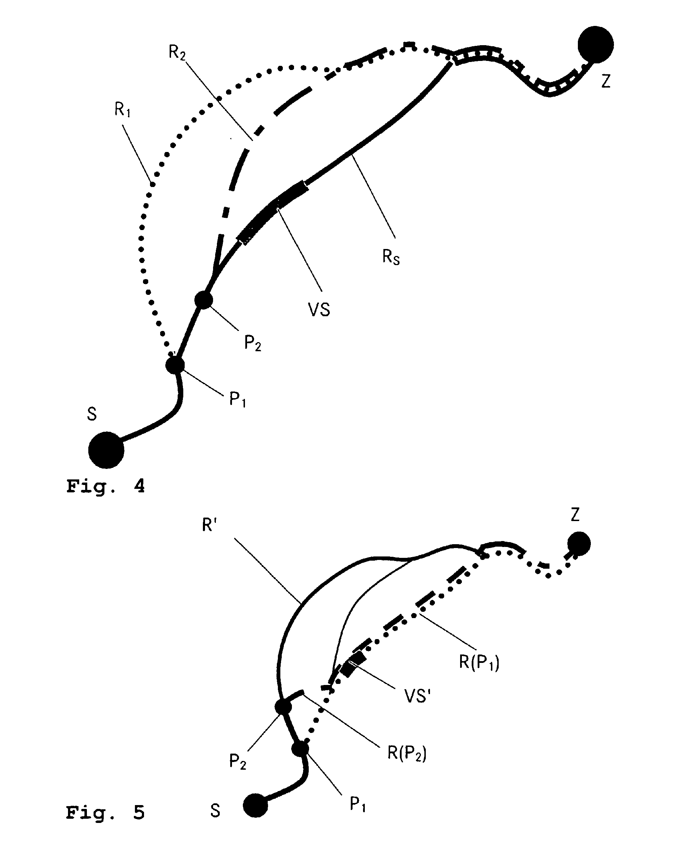

Anhand Fig. 4 und Fig. 5 wird das Konzept der Entscheidungspunkte näher erläutert. Dabei zeigt Fig. 4 Entscheidungspunkte auf der berechneten Route, und Fig. 5 Entscheidungspunkte auf der wegen einer Verkleinerung einer Verkehrsstörung neu berechneten Route. Entscheidungspunkte werden von der Verkehrszentrale bei einer Änderung der berechneten Route verwendet, um ohne genaue Kenntnis der Fahrzeugposition dem Fahrzeug mitzuteilen, an welchen Punkten, d.h. Ortspositionen der ursprünglich berechneten Route ein Wechsel auf eine Alternativroute einen Kostenvorteil (z.B. Zeitvorteil) bringt. Beim Verlassen der ursprünglich berechneten Route am nächsten in Fahrtrichtung des Fahrzeugs liegenden Entscheidungspunkt kann der größte Kostenvorteil erzielt werden. Deshalb wird vom fahrzeugseitigen System dieser Punkt ausgewählt und angezeigt. Dann kann entschieden werden, beispielsweise vom Fahrzeugführer oder automatisch, ob er für den erwarteten Kostenvorteil eine ggf. kostenpflichtige Anfrage nach neuen routenbezogenen Daten (Verkehrsdaten bei On-Board-Zielführung bzw. Fahrtroutendaten nach einer Neuberechnung der Route bei Off-Board-Zielführung) startet.

In Fig. 4 sind Entscheidungspunkte $P_1$, $P_2$ sowie Routen $R_1$, $R_2$, $R_s$ und eine Verkehrsstörung VS dargestellt. Dabei hat sich die "optimale" Route durch eine auf der ursprünglich berechneten Route $R_s$ neu aufgetretene Verkehrsstörung VS geändert. Je nach Fahrzeug-Position ist eine der beiden AlternativRouten oder die ursprüngliche Route die günstigste. Befindet sich das Fahrzeug vor dem Entscheidungspunkt $P_1$, so ist $R_1$ die "beste" Route. Befindet sich das Fahrzeug zwischen den Entscheidungspunkten $P_1$ und $P_2$, so ist $R_2$ die "beste" Route.

Befindet sich das Fahrzeug nach dem Entscheidungspunkt $P_2$, so ist $R_s$ die "beste" Route.

Das Prinzip der Entscheidungspunkte ist ebenfalls anwendbar, wenn sich die berechnete Route durch eine Verkleinerung oder Auflösung einer relevanten Störung ändert. Dies ist in Fig. 5 gezeigt. Dargestellt sind wiederum Entscheidungspunkte $P_1$, $P_2$ sowie Routen R', $R(P_1)$, $R(P_2)$ und eine Verkehrsstörung VS'. Dabei hat sich die "optimale" Route R' durch eine Verkleinerung der überwachten Verkehrsstörung VS' geändert. Die "optimale" Route umfasst nach der Neuberechnung die Strecke mit der überwachten Verkehrsstörung VS'. Befindet sich das Fahrzeug vor dem Entscheidungspunkt $P_1$, so ist $R(P_1)$ die "beste" Route. Befindet sich das Fahrzeug zwischen den Entscheidungspunkten $P_1$ und $P_2$, so ist $R(P_2)$ die "beste" Route. Befindet sich das Fahrzeug nach dem Entscheidungspunkt $P_2$, so ist die ursprünglich berechnete Route R' die "beste" Route.

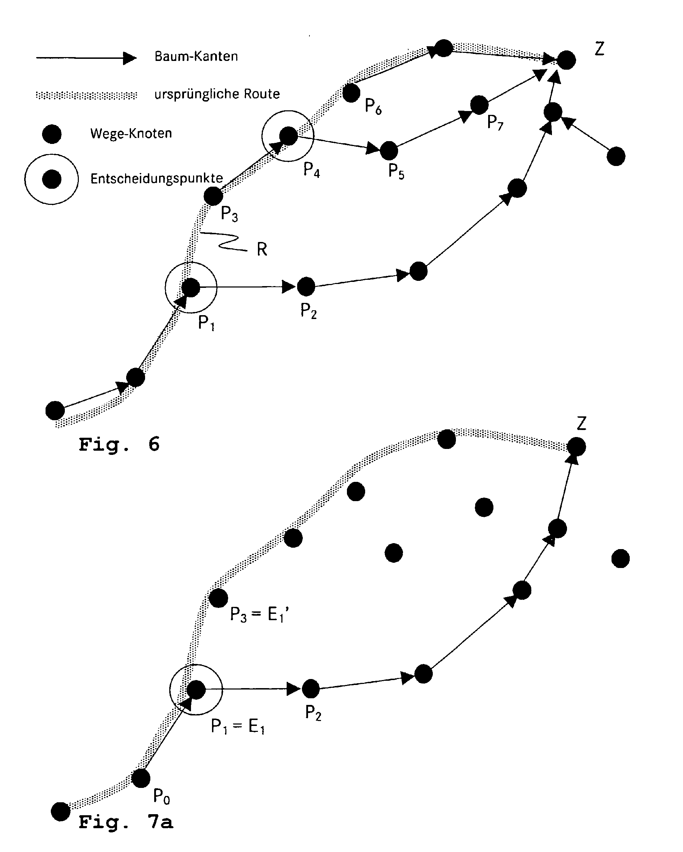

In Fig. 6 wird gezeigt, wie Entscheidungspunkte durch die Berechnung eines "kürzeste-Wege-Baumes" bestimmt werden. Dabei wird der kürzeste-Wege-Baum ("Baum") berechnet nach einem an sich bekannten Verfahren, z.B. dem Dijkstra-Algorithmus, mit den kürzesten Wegen zum Zielort Z. Dies stellt eine Routenberechnung unter Verwendung von Wegeknoten ("Knoten") eines Verkehrswegenetzes dar, z.B. einer digitalen Straßenkarte. Weiterhin ist die ursprünglich berechnete Route R eingezeichnet. Der Nachfolger von Knoten $P_1$ auf dem Baum ist Knoten $P_2$, der sich nicht auf der ursprünglichen Route R befindet. Deshalb ist Knoten $P_1$ der erste Entscheidungspunkt auf der Route. Der Nachfolger von $P_1$ auf der ursprünglichen Route, Knoten $P_3$, ist dagegen nicht durch eine Baum-Kante mit Knoten $P_1$ verbunden. Anders verhält es sich mit dem Knoten $P_4$, der sowohl auf dem Baum als auch auf der ursprünglichen Route der Nachfolger von Knoten $P_3$ ist, daher ist Knoten $P_3$ kein Entscheidungspunkt. Der Nachfolger von Knoten $P_4$ auf dem Baum, Knoten $P_5$, ist nicht der Nachfolger von $P_4$ auf der ursprünglichen Route, so dass Knoten $P_4$ der zweite

Entscheidungspunkt ist.

Durch Verfolgen der Baum-Nachfolger eines Entscheidungspunktes ist zu diesem Entscheidungspunkt auch der kürzeste Weg zum Ziel ablesbar. So verläuft in Fig. 6 der kürzeste Weg vom Entscheidungspunkt $P_4$ über $P_5$ und $P_7$ zum Zielort Z. Im Falle, dass genügend Übertragungskapazität bei der Benachrichtigung des Fahrzeugs über die neu berechnete "optimale" Route besteht, kann der Verlauf der neu berechneten "optimalen" Route eines oder mehrerer Entscheidungspunkte auch mit übertragen werden.

Dieses Vorgehen zur Ermittelung der Entscheidungspunkte ist realisierbar durch eine einzige, rückwärts gerichtete Wegesuche, wobei vom Zielort Z aus ein kürzeste-Wege-Baum berechnet wird, der die optimalen Wege von jedem Punkt des Verkehrsnetzes zum Zielort Z enthält. Dabei wird insbesondere für jeden Knoten auf dem Verkehrsnetz ein eindeutiger Nachfolgeknoten ermittelt, der auf dem optimalen Weg zum Zielort Z liegt, und es wird für jeden Knoten die Fahrtzeit auf der schnellsten Route zum Zielort Z ermittelt. Diejenigen Knoten auf der berechneten Route R werden ausgewählt, deren Nachfolgeknoten auf dem kürzeste-Wege-Baum nicht auf der Route R liegen und als Entscheidungspunkte gewählt werden. Für jeden Entscheidungspunkt wird zur Berechnung der Zeitersparnis die Differenz zwischen der Reisezeit auf der berechneten Route R vom Entscheidungspunkt zum Zielort Z und der entsprechenden Reisezeit auf dem neu berechneten kürzeste-Wege-Baum gebildet.

Alternativ wird zur Ermittelung der Entscheidungspunkte zunächst die "optimale" Route von der Stelle auf der berechneten Route R aus neu berechnet, die das Fahrzeug unter Annahme einer Mindestgeschwindigkeit bereits überschritten hat, wobei bei der Berücksichtigung von Verkehrsprognosen davon ausgegangen wird, dass sich das Fahrzeug zum aktuellen Zeitpunkt an dieser Stelle befindet. Diese Route wird bis zu einem ersten Entscheidungspunkt $E_i$ auf der berechneten Route R verlaufen und dann davon abzweigen. In einem zweiten Schritt wird eine "optimale" Route R' von dem Punkt $E_i$' aus berechnet, der direkt hinter dem im letzten Schritt berechneten Entscheidungspunkt $E_i$ auf der berechneten Route R liegt, wobei davon ausgegangen wird, dass sich das Fahrzeug zum aktuellen Zeitpunkt an Punkt $E_i$' befindet. Falls diese Route R' nicht mit der ursprünglichen Route R übereinstimmt, entsteht dadurch ein weiterer Entscheidungspunkt $E_{i+1}$. Dieser zweite Schritt wird so lange wiederholt, bis eine maximal vorgegebene Anzahl an Iterationen erreicht ist, der zuletzt berechnete Entscheidungspunkt $E_i$ hinter dem Punkt auf der Route liegt, den das Fahrzeug unter Annahme einer Maximalgeschwindigkeit maximal bereits erreicht haben kann, oder die zuletzt berechnete Route mit der ursprünglich berechneten Route übereinstimmt. Für jeden Entscheidungspunkt wird zur Berechnung der Zeitersparnis die Differenz zwischen der Reisezeit auf der ursprünglich berechneten Route vom Entscheidungspunkt zum Zielort Z und der entsprechenden Reisezeit auf der neu berechneten Route gebildet.

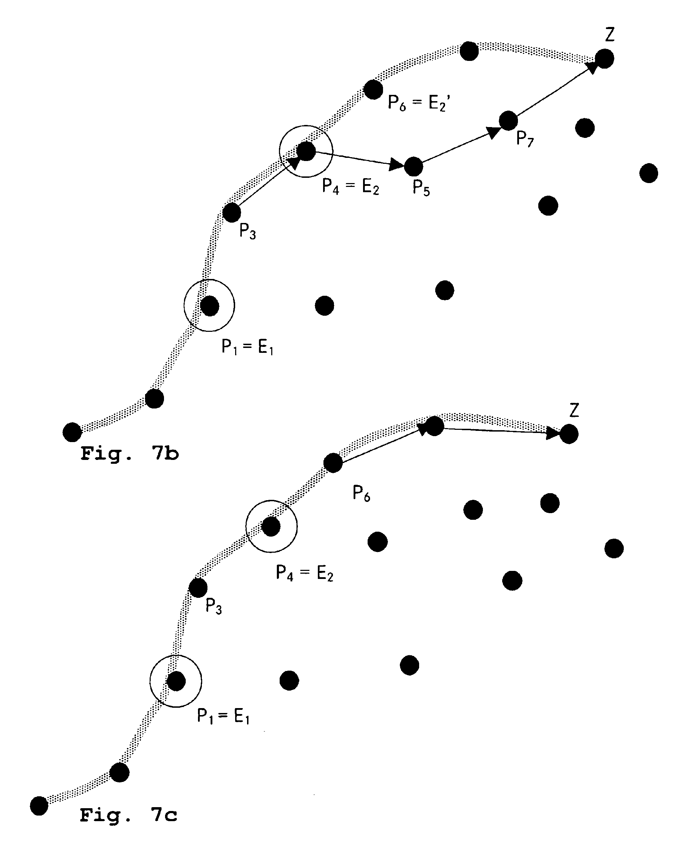

Fig. 7 a, b, c visualisiert die Ermittelung der Entscheidungspunkte durch eine Abfolge mehrerer Routenberechnungen. Es wird dabei auf die bereits in Fig. 6 gezeigte Ausgangslage Bezug genommen. Bei der ersten Routenberechnung, siehe Fig. 7a, wird der Startpunkt $P_0$ gewählt, da davon ausgegangen wird, dass das Fahrzeug zum Zeitpunkt $t_1$ dieser neuen Routenberechnung mindestens den Knoten $P_0$ erreicht hat. Bei dieser Routenberechnung werden aktuelle und prognostizierte Verkehrsdaten unter der Annahme berücksichtigt, dass sich das Fahrzeug zum Zeitpunkt $t_1$ in $P_0$ befindet. Diese erste Routenberechnung ergibt, dass die "optimale" Route am Knoten $P_1$ von der berechneten Route R abzweigt, daher wird $P_1$ als erster Entscheidungspunkt $E_1$ gewählt. Die zweite Routenberechnung, siehe Fig. 7b, beginnt im Nachfolgeknoten $E_1$'=$P_3$ von Knoten $E_1$ auf der berechneten Route R. Nun wird davon ausgegangen, dass sich das Fahrzeug zum Zeitpunkt $t_1$ in $P_3$ befindet. Bei dieser zweiten Routenberechnung wird der Knoten $P_4 = E_2$ als zweiter Entscheidungspunkt ermittelt. Die bei der dritten Berechnung, siehe Fig. 7c, erhaltene Route entspricht der ursprünglich berechneten Route R, so dass kein weiterer Entscheidungspunkt erkannt wird. Die Folge von Routenberechnungen ist damit beendet.

Bei der zweiten Alternative ist gegenüber der ersten Alternative mehr Rechenzeit zu investieren, da bei den gängigen Verfahren eine Routenberechnung in etwa gleich aufwändig ist wie die Berechnung des kürzeste-Wege-Baums. Der Vorteil der zweiten Alternative besteht in der korrekteren Verwendung von Verkehrsprognosen. Es wird dem Rechnung getragen, dass sich das Fahrzeug zum Zeitpunkt $t_1$ der neuen Routenberechnung an verschiedenen Stellen auf der ursprünglichen Route befinden kann. Somit wird auch die zukünftige Verkehrslage für jeden Streckenabschnitt in etwa für den Zeitpunkt berücksichtigt, an dem das Fahrzeug dort ankommen kann. Bei der Berechnung des kürzeste-Wege-Baums nach der ersten Alternative wird dagegen der Ankunftszeitpunkt des Fahrzeugs $t_z$ am Zielort Z festgelegt. Die Ankunftszeiten aller anderen Streckenabschnitte sind die Zeitpunkte, zu denen das Fahrzeug dort abfahren müsste, um zur Zeit $t_z$ den Zielort Z zu erreichen.

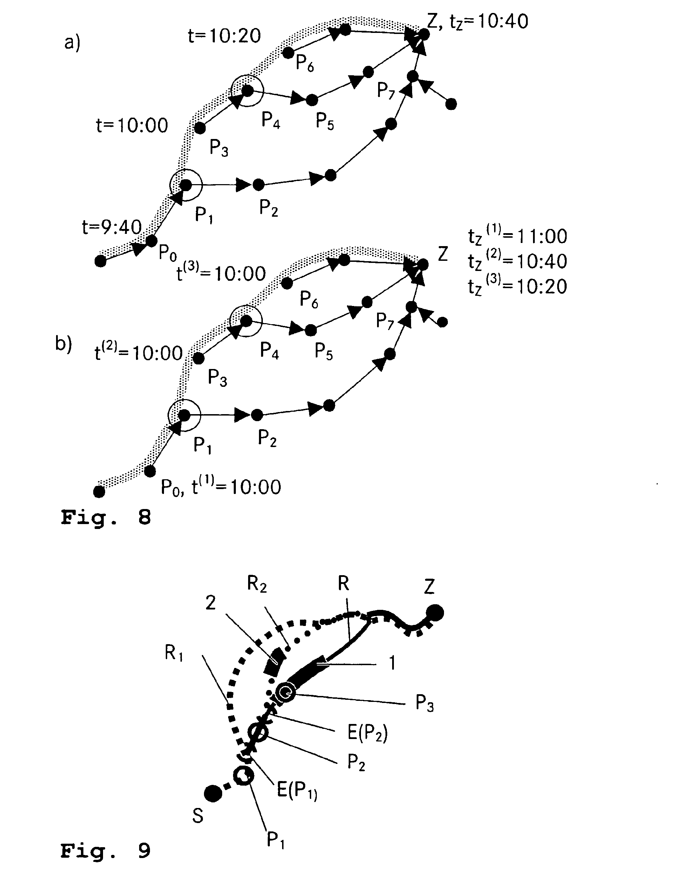

Diesen Unterschied veranschaulicht Fig. 8: Bei der Berechnung des kürzeste-Wege-Baums wird die einheitliche Ankunftszeit $t_z$=10:40 Uhr am Zielort angenommen, siehe Fig. 8a. Daraus resultiert eine Abfahrtszeit von 10:20 Uhr an $P_6$, 10:00 Uhr an $P_3$ und 9:40 Uhr an $P_0$. In der Realität befindet sich das Fahrzeug aber um 10:00 Uhr irgendwo zwischen $P_0$ und $P_6$ auf der ursprünglichen Route. Bei den in Fig. 8b dargestellten drei Routenberechnungen von $P_0$, $P_3$ und $P_6$ aus wird jeweils eine Abfahrtszeit von 10:00 Uhr angenommen. Daraus resultieren dann die drei möglichen Ankunftszeiten 11:00 Uhr, 10:40 Uhr und 10:20 Uhr. Somit wird dann auch die Verkehrssituation nahe des Zielortes Z für diese drei unterschiedlichen Zeiten berücksichtigt, was beim kürzeste-Wege-Baum in Fig. 8a nicht der Fall ist. Dadurch kann es bei starken prognostizierten Änderungen der Verkehrslage zur Berechnung unterschiedlicher Routen und unter Umständen auch unterschiedlicher Entscheidungspunkte durch die beiden Verfahren kommen. Mit anderen Worten wird bei der in Fig. 8b gezeigten zweiten Alternative beim Start jeder Routenberechnung i (i=1,2,3) angenommen, dass sich das Fahrzeug um $t^{(i)}$ = 10:00 Uhr am jeweiligen Startort $P_0$, $P_3$ und $P_6$ befindet.

In einer dritten Alternative zur Berechnung der Entscheidungspunkte wird die in der Verkehrszentrale unbekannte Position des Fahrzeugs abgeschätzt. Dazu wird beispielsweise eine letzte vom Fahrzeug bestimmte und gesendete Fahrtziel-Ankunftszeit verwendet. Bei einer Änderung der Verkehrslage werden in der Verkehrszentrale drei (mögliche) Fahrzeugpositionen abgeschätzt, nämlich für langsamstes, schnellstes und durchschnittliches Fahrerverhalten, und für diese abgeschätzten Fahrzeugpositionen werden dann Änderungen der berechneten Route R und ggf. Entscheidungspunkte ermittelt und an das Fahrzeug gesendet.

Mit den Entscheidungspunkten $E_1$ und $E_2$ auf der ursprünglich berechneten Route R sind nun solche Knoten bestimmt worden, bei denen nach aktuell vorliegenden Verkehrsdaten und -prognosen ein Abbiegen von der berechneten, d.h. ursprünglichen Route R auf eine günstigere Route führt als das Verbleiben auf der Route R. Dabei wird für jeden Entscheidungspunkt $E_1$, $E_2$ der Kostenvorteil (z.B. Zeitvorteil) berechnet, der durch einen Wechsel auf die "günstigere" Route entsteht. Zumindest der in Fahrtrichtung letzte Entscheidungspunkt und sein Kostenvorteil werden als Teil der routenbezogenen Daten drahtlos zum Fahrzeug übertragen. Alternativ oder zusätzlich kann vorgesehen sein, eine vorgebbare maximale Anzahl von Entscheidungspunkten mit ihren Kostenvorteilen drahtlos zum Fahrzeug zu übertragen. Natürlich kann auch auf die Übertragung eines jeweiligen Kostenvorteils verzichtet werden.

Von der fahrzeugseitigen Einrichtung wird nach Erhalt einer solchen Übertragung derjenige Entscheidungspunkt ausgewählt, der dem Fahrzeug in Fahrtrichtung am nächsten liegt. Dem Fahrzeugführer wird die Lage dieses Entscheidungspunktes, eventuell zusammen mit der möglichen Kostenersparnis, angezeigt. Anschließend kann der Fahrzeugführer dann routenbezogene Daten in Form der neu berechneten Route (Off-Board-Zielführung) oder der geänderten Verkehrslage (On-Board-Zielführung) bei der Verkehrszentrale drahtlos anfordern. Dabei wird von der fahrzeugseitigen Einrichtung die erhaltene Übertragung ignoriert, falls sich in Fahrtrichtung kein Entscheidungspunkt mehr befindet oder die Zielführung bereits abgeschlossen wurde.

In Fig. 9 wird die Verwendung von Entscheidungspunkten $E(P_1)$ und $E(P_2)$ im Zusammenhang mit Fahrzeugpositionen $P_1$, $P_2$, $P_3$ bei der dynamischen Zielführung vom Startort S zum Zielort Z noch einmal aufgezeigt. Die fahrzeugseitige Einrichtung überprüft anhand der Fahrzeugposition welcher Entscheidungspunkt geeignet ist und fordert automatisiert oder auf Anforderung drahtlose entsprechende routenbezogene Daten von der Verkehrszentrale an. Befindet sich das Fahrzeug an der Position $P_1$, so ermöglicht ein Abzweigen von der berechneten Route R am Entscheidungspunkt $E(P_1)$ auf die neu berechnete Route $R_1$ ein Umfahren des Verkehrsstaus 1 und damit - trotz der größeren Länge der neu berechneten Route $R_1$ gegenüber der berechneten Route R - eine schnellere Reise zum Zielort Z als bei einem Verbleiben auf der berechneten Route R. Befindet sich das Fahrzeug an der Position $P_2$, so ermöglicht ein Abzweigen von der berechneten Route R am Entscheidungspunkt $E(P_2)$ auf die neu berechnete Route $R_2$ immer noch ein Umfahren des Verkehrsstaus 1 und damit - trotz des auf der neu berechneten Route $R_2$ lokalisierten kleinen Verkehrstaus 2 - eine schnellere Reise zum Zielort Z als bei einem Verbleiben auf der berechneten Route R. Befindet sich das Fahrzeug dagegen an der Position $P_3$, so existiert kein Entscheidungspunkt mehr, der ein Abzweigen von der berechneten Route R und damit ein Umfahren des Verkehrsstaus 1 ermöglichen würde.

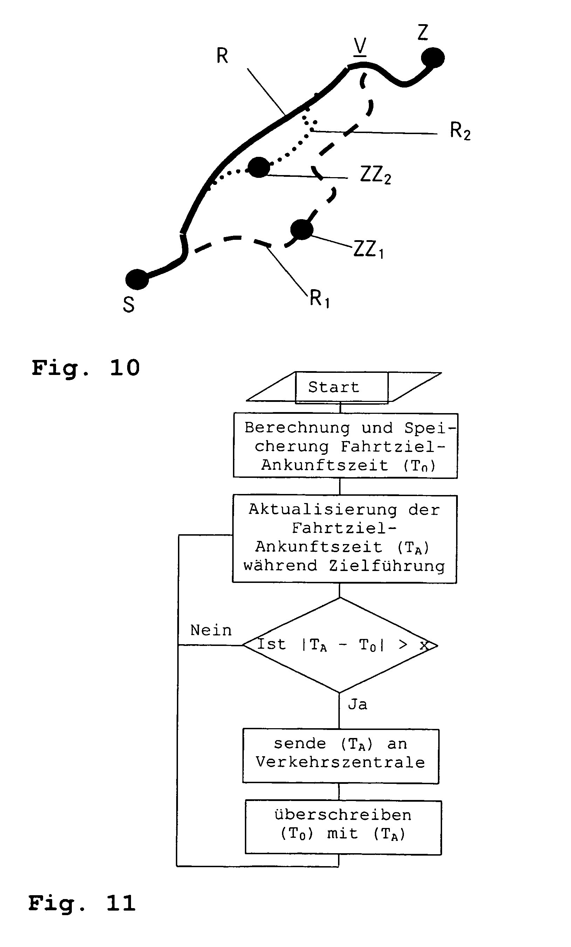

In Fig. 10 ist die Verwendung von Information über das vorgebbare Gebiet verdeutlicht. Da das Fahrzeug nach dem Verlassen des vorgebbaren Gebiets V über keine routenbezogenen Daten für den Zielort Z mehr verfügt und die Verkehrszentrale keine Information darüber hat, ob die berechnete Route R vom Fahrzeug weiterhin verfolgt wird, umfassen die routenbezogenen Daten Information über das vorgebbare Gebiet V. Damit ist eine Verwendung routenbezogener Daten im Fahrzeug auch bei Verfolgung einer neuen Route $R_2$ zu einem vom Fahrer gewählten Zwischenziel $ZZ_2$ möglich. Denn die Route $R_2$ ist vollständig vom Gebiet V abgedeckt. Demgegenüber ist keine Verwendung routenbezogener Daten im Fahrzeug möglich, wenn das Fahrzeug eine neue Route $R_1$ zu einem vom Fahrer gewählten Zwischenziel $ZZ_1$ verfolgt. Denn ein Großteil der Route $R_1$ ist nicht vom Gebiet V abgedeckt. Somit ist fahrzeugseitig stets prüfbar, ob ein gewünschtes Zwischenziel noch innerhalb des vorgebbaren Gebiets V liegt und/ oder ob die Ankunftszeit am Zwischenziel stark von der ursprünglichen Ankunftszeit abweicht. In diesem Fall werden automatisiert oder auf Anforderung des Fahrers neue routenbezogene Daten von der Verkehrszentrale angefordert.

In Fig. 11 wird die Verwendung einer fahrzeugseitig bestimmten Fahrtziel-Ankunftszeit für die Dauer der Überwachung der oder jeder Verkehrsstörung in der Verkehrszentrale dargelegt. Damit die Überwachung nicht zu früh - beispielsweise wenn das Fahrzeug langsamer als in der Verkehrszentrale abgeschätzt unterwegs ist - oder zu spät - beispielsweise wenn das Fahrzeug schneller als in der Verkehrszentrale abgeschätzt unterwegs ist - abgebrochen wird, wird eine fahrzeugseitig bestimmte Fahrtziel-Ankunftszeit $T_0$ drahtlos von der fahrzeugseitigen Einrichtung an die Verkehrszentrale gesendet. Danach findet fahrzeugseitig ein fortlaufender Vergleich der gespeicherten Fahrtziel-Ankunftszeit $T_0$ mit einer aktuell bestimmten Ankunftszeit $T_A$ statt. Unterscheidet sich die aktuell bestimmte Ankunftszeit $T_A$ von der gespeicherten Fahrtziel-Ankunftszeit $T_0$ um mehr als einen vorgebbaren Schwellwert X (z.B. X = 30 Minuten), so wird automatisch oder auf Anforderung eine entsprechende Information von der fahrzeugseitigen Einrichtung an die Verkehrszentrale gesendet sowie die gespeicherte Fahrtziel-Ankunftszeit $T_0$ mit der aktuell bestimmten Ankunftszeit $T_A$

überschrieben. Anschließend wird wiederum eine aktuelle Ankunftszeit $T_A$ bestimmt. Unterscheidet sich die aktuell bestimmte Ankunftszeit $T_A$ von der gespeicherten Fahrtziel-Ankunftszeit $T_0$ nicht um mehr als den vorgebbaren Schwellwert X, so wird wiederum eine aktuelle Ankunftszeit $T_A$ bestimmt.

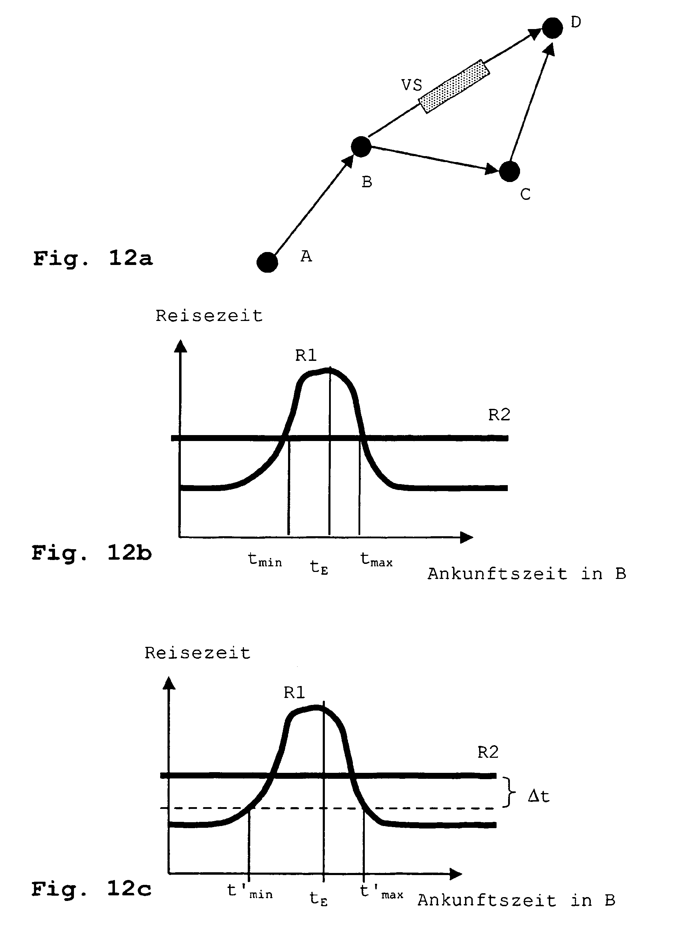

Fig. 12 veranschaulicht schematisch die Verwendung einer Routenänderungs-Ortsposition mit Änderungszeitpunkt einer berechneten Route. Schematisch dargestellt ist in Fig. 12a eine dynamische Zielführung von Startposition A zu Zielposition D. Dabei existieren zwei mögliche Verbindungen, nämlich von Startposition A über Ortsposition B zu Zielposition D oder alternativ von Startposition A über Ortspositionen B und C zu Zielposition D. Während die Verbindung von Ortsposition B zu Zielposition D eine geringere Länge aufweist als über Ortspositionen B und C zu Zielposition D, so ist jedoch auf der ersten Alternative zeitweise eine Verkehrsstörung VS lokalisiert.

Diese Verkehrsstörung VS führt zu dem in Fig. 12b dargestellten Reisezeitverlauf, der für die erste Alternative mit R1 und für die zweite Alternative mit R2 bezeichnet ist und die jeweils für die Fahrt von Ortsposition B nach Zielposition D benötigte Zeit zu verschiedenen Ankunftszeiten an der Routenänderungs-Ortsposition B angibt. Deutlich zu erkennen ist der durch die Verkehrsstörung VS verursachte, zeitweise Anstieg der Reisezeit R1. Bei einer erwarteten Ankunftszeit des Fahrzeug in B von $t_E$ wird also in der Verkehrszentrale die Verbindung über Ortspositionen B und C zu Zielposition D als Route berechnet, da dies die zum Zeitpunkt $t_E$ schnellste Verbindung ist.

Wenn nun aber das Fahrzeug vor dem Zeitpunkt $t_{min}$ oder nach dem Zeitpunkt $t_{max}$ die Ortsposition B erreicht, ist diese berechnete Route nicht mehr die schnellste. Deshalb wird die Ortsposition B als Routenänderungs-Ortsposition mit den Änderungszeitpunkten $t_{min}$ und $t_{max}$ von der Verkehrszentrale an die fahrzeugseitige Einrichtung übertragen. Zusätzlich können auch routenbezogene Daten betreffend die Verbindung von Ortsposition B zu Zielposition D an die fahrzeugseitige Einrichtung übertragen werden. In diesem Fall kann bei einem Eintreffen des Fahrzeuges an der Routenänderungs-Ortsposition B vor $t_{min}$ oder nach $t_{max}$ automatisiert oder auf Anforderung auf die neue Route von Ortsposition B zu Zielposition D gewechselt werden. Sind entsprechende routenbezogene Daten für die Alternativroute an der Routenänderungs-Ortsposition B in der fahrzeugseitigen Einrichtung nicht verfügbar, werden diese routenbezogenen Daten automatisch oder auf Anforderung von der Verkehrszentrale angefordert.

Alternativ kann, wie in Fig. 12 c gezeigt, vorgesehen sein, dass eine Routenänderung vom Fahrzeug nur dann durchgeführt wird, wenn sich die Reisezeit dadurch um mindestens einen bestimmten Betrag $\Delta t$ vermindert. In diesem Fall würde bei einem Eintreffen des Fahrzeuges an der Routenänderungs-Ortsposition B vor $t'_{min}$ oder nach $t'_{max}$ automatisiert oder auf Anforderung auf die neue Route von Ortsposition B zu Zielposition D gewechselt. Dieses Vorgehen ist insbesondere geeignet, wenn die fahrzeugseitige Einrichtung von der Verkehrszentrale neue, zumeist kostenpflichtige routenbezogene Daten anfordern muss.

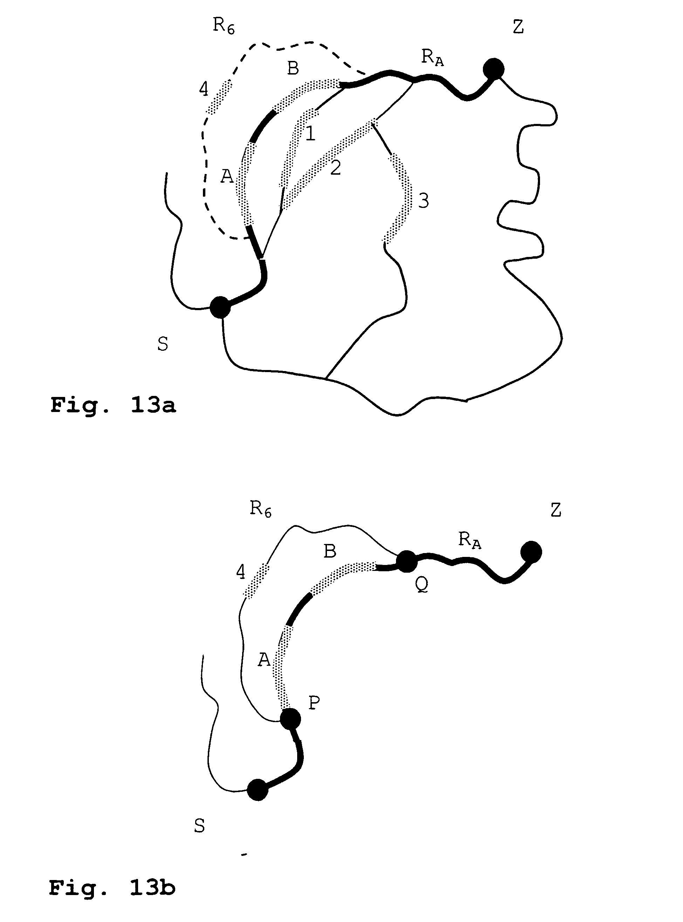

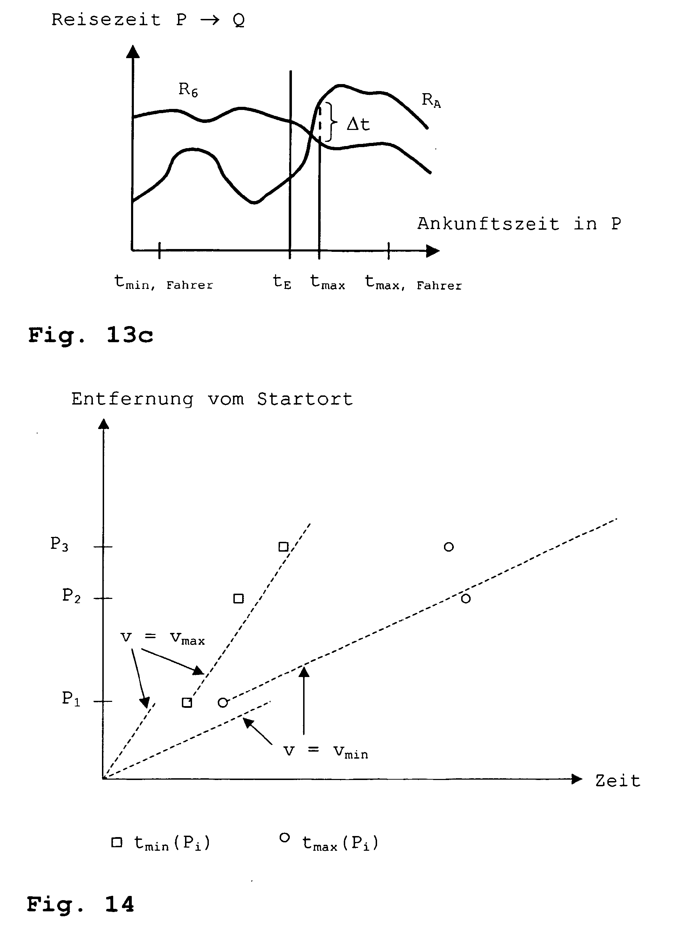

Der Einsatz von Routenänderungs-Ortspositionen mit Änderungszeitpunkten einer berechneten Route wird in Fig. 13 dargestellt. In Fig. 13 wird das Beispiel aus Fig. 2 verwendet, wobei im Anschluss an Fig. 2f weitere Berechnungen durchgeführt werden. In Fig. 2 wurden Routen $R_i$, i=1 ... m berechnet, auf denen sich zu überwachende "relevante" Verkehrsstörungen befinden. Nun werden gemäß Parametern eines Fahrzeugs bzw. Fahrers, beispielsweise minimal und maximal anzunehmenden Durchschnittsgeschwindigkeiten, jedem Anfangspunkt einer Verkehrsstörung eine früheste Ankunftszeit $t_{min,Fahrer}$ und eine späteste Ankunftszeit $t_{max, Fahrer}$ zugeordnet. Diese Ankunftszeiten ergeben sich beispielsweise aus der minimalen und maximalen angenommenen mittleren Geschwindigkeit auf der jeweiligen berechneten Route. Sodann wird eine weitere Berechnung einer Route durchgeführt, bei der als Kosten (z.B. Reisezeit) für eine Kante k mit einer zu überwachenden Verkehrsstörung statt der Kosten $C_k(t_E)$ (dabei ist $t_E$ die erwartete Ankunftszeit des Fahrzeugs an Kante k) die Kosten $\max\left(C_k(t)\right), t \in \left[t_{min, Fahrer}, t_{max, Fahrer}\right]$ verwendet werden. Mit anderen Worten werden die Reisezeiten im "ungünstigsten" Fall verwendet. Als Kosten der restlichen Kanten werden die Kosten bei freiem Verkehr eingesetzt. Solange sich dabei eine neu berechnete Route $R_j$ von der zuvor berechneten Route $R_{j-1}$ unterscheidet, werden alle Verkehrsstörungen auf $R_j$ als zu überwachen markiert und es wird eine weitere Route berechnet. In Fig. 13a sind die Verkehrsstörungen 1, 2, A und B größer gegenüber Fig. 2 geworden, berechnet wird Route $R_6$ und zusätzlich überwacht wird Verkehrsstörung 4. Die hierbei zusätzlich als zu überwachen markierte Verkehrsstörung 4 wird nicht von der Verkehrszentrale an die fahrzeugseitige Einrichtung gesendet.

Anschließend wird zu allen Routen $R_i \# R_A$ (i = 1...m...n) der Ortspunkt P als Routenänderungs-Ortsposition bestimmt, an dem $R_i$ von der unter Annahme einer mittleren Geschwindigkeit "optimalen" Route $R_A$ abzweigt, und der Ortspunkt Q wird bestimmt, an dem die beiden Routen wieder zusammentreffen. Der Bereich möglicher Ankunftszeiten $\left[t_{min, Fahrer}, t_{max, Fahrer}\right]$ im Ortspunkt P wird bestimmt und die erwarteten Reisezeiten von P nach Q bei Abfahrt in P zwischen $t_{min,Fahrer}$ und $t_{max,Fahrer}$ auf den Routen $R_A$ und $R_i$ werden verglichen. Falls vorhanden, wird der späteste Zeitpunkt $t_{min}$ vor der erwarteten Ankunftszeit $t_E$ im Ortspunkt P bestimmt, zu dem die Reisezeit zwischen P und Q auf der Route $R_i$ die entsprechende Reisezeit auf $R_A$ um mindestens ein vorgegebenes Maß unterschreitet. Falls vorhanden, wird der früheste Zeitpunkt $t_{max}$ nach $t_E$ bestimmt, für den dies ebenfalls gilt. In Fig. 13b sind die Ortspunkte P und Q auf der Route $R_A$ eingezeichnet sowie die Route $R_6$. In Fig. 13c dargestellt sind beispielhaft die Reisezeiten zwischen P und Q auf den Routen $R_6$ und $R_A$. Ein Zeitpunkt $t_{min}$ existiert hier nicht, da zwischen $t_{min,Fahrer}$ und $t_E$ die Reisezeit auf $R_6$ immer höher ist als auf $R_A$.

Anhand von Fig. 14 wird dargelegt, welche Daten bezüglich Routenänderungs-Ortspositionen von der Verkehrszentrale zur fahrzeugseitigen Einrichtung übertragen werden. Zu jeder vorher bestimmten Routenänderungs-Ortspositionen $P_i$ (i = 1 ... n; $P_i$ ist weiter vom Startort S entfernt als $P_j$ für i>j) wird geprüft, ob die zugehörige Ankunftszeit $t_{min}(P_i)$ unterschritten bzw. die Ankunftszeit $t_{max}(P_i)$ überschritten werden kann, falls das Fahrzeug keine der Ankunftszeiten $t_{min}(P_j)$, j<i unterschreitet und keine der Ankunftszeiten $t_{max}(P_j)$, j<i überschreitet und weder eine angenommene Mindestgeschwindigkeit $v_{min}$ unterschreitet noch eine angenommene Höchstgeschwindigkeit $v_{max}$ überschreitet. Nur bei Erfüllung dieser Bedingung wird die Ankunftszeit $t_{min}(P_i)$ bzw. $t_{max}(P_i)$ zum Fahrzeug übertragen, wobei auch die Koordinaten von $P_i$ nicht übertragen werden, falls weder $t_{min}(P_i)$ noch $t_{max}(P_i)$ zu übertragen sind.

Bezogen auf Fig. 14 werden folgende $t_{min}(P_i)$ und $t_{max}(P_i)$ übertragen: $t_{min}(P_1)$ und $t_{max}(P_1)$ liegen in dem Bereich, der mit Geschwindigkeiten zwischen $v_{min}$ und $v_{max}$ erreicht werden kann, und werden somit übertragen. $t_{min}(P_2)$ kann dagegen nicht mehr unterschritten werden, wenn das Fahrzeug mit $v_{max}$ fährt und nicht vor $t_{min}(P_1)$ im Punkt $P_1$ ankommt. $t_{max}(P_2)$ kann bei Einhalten von $t_{max}(P_1)$ und $v_{min}$ nicht überschritten werden. Deshalb wird der Punkt $P_2$ nicht zum Fahrzeug übertragen. Punkt $P_3$ wird übertragen, da $t_{max}(P_3)$ überschritten werden könnte, $t_{min}(P_3)$ wird nicht übertragen.

Weiterhin kann vorgesehen sein, dass Verkehrsstörungen nur so lange in der Verkehrszentrale überwacht werden, wie das Fahrzeug unter Einhaltung einer minimal anzunehmenden Geschwindigkeit und bei Einhaltung der durch die $t_{max}(P_i)$ gesetzten Zeitgrenzen maximal zum Zielort Z unterwegs ist, wobei bei einer Neuberechnung der Route die mindestens durchfahrene Strecke auf der ursprünglich berechneten Route unter Annahme einer Mindestgeschwindigkeit und der Einhaltung der $t_{max}(P_i)$ bestimmt wird.

**Patentansprüche**

1.  Verfahren zur dynamischen Zielführung eines Fahrzeuges, wobei eine fahrzeugseitige Einrichtung routenbezogene Daten für ein Fahrtziel von einer Verkehrszentrale drahtlos anfordert und die Verkehrszentrale daraufhin für das Fahrzeug eine Route zum Fahrtziel berechnet und speichert sowie routenbezogene Daten drahtlos an die fahrzeugseitige Einrichtung sendet,
    **dadurch gekennzeichnet,**
    **dass** wenigstens eine nicht auf der berechneten Route lokalisierte Verkehrsstörung in der Verkehrszentrale überwacht und bei einer Verminderung dieser Verkehrsstörung die berechnete Route zumindest teilweise neu berechnet wird.

2.  Verfahren nach Anspruch 1,
    **dadurch gekennzeichnet,**
    **dass** alle in einem vorgebbaren Gebiet um die berechnete Route lokalisierten Verkehrsstörungen überwacht werden.

3.  Verfahren nach Anspruch 1 oder 2,
    **dadurch gekennzeichnet,**
    **dass** für den Fall einer Änderung der neuberechneten Route gegenüber der berechneten Route die Verkehrszentrale eine Information an die fahrzeugseitige Einrichtung sendet.

4.  Verfahren nach einem der Ansprüche 1 bis 3,
    **dadurch gekennzeichnet,**
    **dass** die Verkehrszentrale zusätzlich eine Routenänderungs-Ortsposition mit Änderungszeitpunkt einer berechneten Route an die fahrzeugseitige Einrichtung sendet.

5.  Verfahren nach einem der Ansprüche 1 bis 4,
    **dadurch gekennzeichnet,**
    **dass** die Route nur dann neu berechnet wird, wenn eine nicht auf der berechneten Route lokalisierte Verkehrsstörung sich um mehr als ein vorgebbares Maß vermindert.

6.  Verfahren nach einem der Ansprüche 1 bis 5,
    **dadurch gekennzeichnet,**
    **dass** die routenbezogenen Daten als Verkehrsdaten ausgebildet sind.

7. Verfahren nach einem der Ansprüche 1 bis 6,
**dadurch gekennzeichnet,**
**dass** die routenbezogenen Daten als Fahrtroutendaten ausgebildet sind.

8. Verfahren nach Anspruch 6,
**dadurch gekennzeichnet,**
**dass** zusätzlich Information über den Verlauf einer berechneten Route zwischen fahrzeugseitiger Einrichtung und Verkehrszentrale drahtlos übertragen wird.

9. Verfahren nach einem der Ansprüche 2 bis 6 oder 8,
**dadurch gekennzeichnet,**
**dass** zusätzlich Information über das vorgebbare Gebiet zwischen fahrzeugseitiger Einrichtung und Verkehrszentrale drahtlos übertragen wird.

10. Verfahren nach einem der Ansprüche 1 bis 9,
**dadurch gekennzeichnet,**
**dass** zumindest der Teil der berechneten Route neu berechnet wird, den das Fahrzeug unter Annahme einer Mindestgeschwindigkeit noch nicht durchfahren hat.

11. Verfahren nach Anspruch 10,
**dadurch gekennzeichnet,**
**dass** drei Neuberechnungen unter Verwendung von drei verschiedenen Durchschnittsgeschwindigkeiten des Fahrzeugs durchgeführt werden.

12. Verfahren nach einem der Ansprüche 1 bis 11,
**dadurch gekennzeichnet,**
**dass** die oder jede Verkehrsstörung mindestens für eine verkehrszentralenseitig abgeschätzte Fahrtzielerreichungszeitdauer des Fahrzeugs überwacht wird.

13. Verfahren nach einem der Ansprüche 1 bis 12,
**dadurch gekennzeichnet,**
**dass** zusätzlich eine fahrzeugseitig bestimmte Fahrtziel-Ankunftszeit von der fahrzeugseitigen Einrichtung an die Verkehrszentrale drahtlos übertragen wird.

14. Verfahren nach einem der Ansprüche 1 bis 13,
**dadurch gekennzeichnet,**
**dass** zur Bestimmung zu überwachender Verkehrsstörungen in einem ersten Schritt eine Route $R_1$ ohne Berücksichtigung von Verkehrsstörungen zum Fahrtziel berechnet wird, in einem zweiten Schritt eine Route $R_A$ unter Berücksichtigung aller Verkehrsstörungen zum Fahrtziel berechnet wird,
in einem dritten Schritt alle Verkehrsstörungen auf $R_1$ überwacht werden und unter Berücksichtigung nur der bereits überwachten Verkehrsstörungen eine Route $R_2$ zum Fahrtziel berechnet wird,
in einem vierten Schritt alle Verkehrsstörungen auf der zuvor berechneten Route $R_i$, $i \geq 2$, überwacht werden und eine Route $R_{i+1}$ unter Berücksichtigung der überwachten Verkehrsstörungen zum Fahrtziel berechnet wird,
der vierte Schritt so lange wiederholt wird, bis die Route $R_i$ der Route $R_A$ entspricht und bereits in einem vorherigen Schritt alle gegebenenfalls existierenden Verkehrsstörungen auf $R_A$ überwacht werden.

15. Verfahren nach Anspruch 14,
**dadurch gekennzeichnet,**
**dass** die Anzahl der zu berechnenden Routen $R_i$ auf einen vorgebbaren Maximalwert n begrenzt wird.

16. Verfahren nach Anspruch 15,
**dadurch gekennzeichnet,**
**dass** weitere Routen $R_i$ berechnet werden.

17. Computerprogramm mit Programmcode-Mitteln, um alle Schritte von jedem beliebigen der Ansprüche 1 bis 16 durchzuführen, wenn das Programm auf einem Computer ausgeführt wird.

18. Computerprogrammprodukt mit Programmcode-Mitteln, die auf einem computerlesbaren Datenträger gespeichert sind, um das Verfahren nach jedem beliebigen der Ansprüche 1 bis 16 durchzuführen, wenn das Programmprodukt auf einem Computer ausgeführt wird.

19. System zur dynamischen Zielführung eines Fahrzeuges bestehend aus mindestens einer fahrzeugseitigen Einrichtung und einer Verkehrszentrale umfassend

- Empfangsmittel für drahtlose Anforderungen routenbezogener Daten der fahrzeugseitigen Einrichtung, wobei die routenbezogenen Daten ein Fahrtziel des Fahrzeuges betreffen,
- Berechnungsmittel zum Berechnen einer Route zum Fahrtziel des Fahrzeuges,
- Speichermittel zum Speichern der berechnete Route,
- Sendemittel zum drahtlosen Aussenden der routenbezogenen Daten an die fahrzeugseitige Einrichtung,

**dadurch gekennzeichnet,**
**dass** zusätzlich Mittel zur Überwachung wenigstens einer nicht auf der berechneten Route lokalisierten Verkehrsstörung vorgesehen sind und, dass das System so ausgestattet ist, dass bei einer Verminderung dieser Verkehrsstörung die berechnete Route vom Berechnungsmittel zumindest teilweise neu berechnet wird.

**Claims**

1. Method for dynamically navigating a vehicle, wherein a vehicle-mounted device requests route-related data for a destination from a traffic control center in a wirefree fashion, and the traffic control center subsequently calculates a route to the destination for the vehicle and stores it, and transmits route-related dated to the vehicle-mounted device in a wirefree fashion, **characterized in that** at least one traffic disruption which is not located on the calculated route is monitored in the traffic control center and when this traffic disruption decreases the calculated route is at least partially recalculated.

2. Method according to Claim 1, **characterized in that** all the traffic disruptions which are located in a predefinable region around the calculated route are monitored.

3. Method according to Claim 1 or 2, **characterized in that**, if there is a change in the recalculated route in comparison with the calculated route, the traffic control center transmits information to the vehicle-mounted device.

4. Method according to one of Claims 1 to 3, **characterized in that** the traffic control center additionally transmits a location of a change in the route with the time of a change in a calculated route to the vehicle-mounted device.

5. Method according to one of Claims 1 to 4, **characterized in that** the route is recalculated only if a traffic disruption which is not located on the calculated route decreases by more than a predefinable degree.

6. Method according to one of Claims 1 to 5, **characterized in that** the route-related data is in the form of traffic data.

7. Method according to one of Claims 1 to 6, **characterized in that** the route-related data is in the form of route data.

8. Method according to Claim 6, **characterized in that** information relating to the course of a calculated route is additionally transmitted in a wirefree fashion between the vehicle-mounted device and the traffic control center.

9. Method according to one of Claims 2 to 6 or 8, **characterized in that** information relating to the predefinable region is additionally transmitted in a wirefree fashion between the vehicle-mounted device and the traffic control center.

10. Method according to one of Claims 1 to 9, **characterized in that** at least part of the calculated route through which the vehicle has not yet traveled, assuming a minimum velocity, is recalculated.

11. Method according to Claim 10, **characterized in that** three recalculations are carried out using three different average velocities of the vehicle.

12. Method according to one of Claims 1 to 11, **characterized in that** the traffic disruption, or each traffic disruption, is monitored at least for a period of time which it is estimated, at the traffic control center, that the vehicle will take to reach the destination.

**13.** Method according to one of Claims 1 to 12, **characterized in that** a time of arrival at the destination which is determined at the vehicle end is additionally transmitted in a wirefree fashion from the vehicle-mounted device to the traffic control center.

**14.** Method according to one of Claims 1 to 13, **characterized in that**, in order to determine traffic disruptions which are to be monitored, in a first step a route $R_1$ to the destination is calculated without taking into account traffic disruptions,
in a second step a route $R_A$ to the destination is calculated taking into account all the traffic disruptions,
in a third step all the traffic disruptions on $R_1$ are monitored and a route $R_2$ to the destination is calculated taking into account only the traffic disruptions which have already been monitored,
in a fourth step all the traffic disruptions on the previously calculated route $R_i$, $i \geq 2$, are monitored and a route $R_{i+1}$ to the destination is calculated taking into account the monitored traffic disruptions,
the fourth step is repeated until the route $R_i$ corresponds to the route $R_A$, and all the possibly existing traffic disruptions on $R_A$ have already been monitored in a previous step.

**15.** Method according to Claim 14, **characterized in that** the number of routes $R_i$ to be calculated is limited to a predefinable maximum value n.

**16.** Method according to Claim 15, **characterized in that** further routes $R_i$ are calculated.

**17.** Computer program with program code means for carrying out all the steps of any of Claims 1 to 16 if the program is executed on a computer.

**18.** Computer program product with program code means which are stored on a computer-readable data carrier in order to carry out the method according to any of Claims 1 to 16 if the program product is executed on a computer.

**19.** System for dynamically navigating a vehicle, composed of at least one vehicle-mounted device and a traffic control center comprising

- receiver means for wirefree requests of route-related data by the vehicle-mounted device, wherein the route-related data relates to a destination of the vehicle,
- calculation means for calculating a route to the destination of the vehicle,
- storage means for storing the calculated route,
- transmitter means for the wirefree transmission of the route-related data to the vehicle-mounted device, **characterized in that** means for monitoring at least one traffic disruption which is not located on the calculated route are additionally provided and **in that** the system is configured in such a way that when this traffic disruption decreases the calculated route is at least partially recalculated by the calculation means.

**Revendications**

**1.** Procédé de guidage dynamique d'un véhicule, dans lequel un dispositif du véhicule demande par transmission sans fil à une centrale de trafic, des données routières pour une destination de voyage et la centrale de trafic calcule ensuite et mémorise pour le véhicule une route vers la destination du voyage ainsi que des données routières qu'elle émet sans fil vers le dispositif du véhicule, **caractérisé en ce qu'**au moins une perturbation du trafic ne se trouvant pas localisée sur la route calculée est surveillée dans la centrale de trafic et que la route calculée est recalculée au moins partiellement lors d'une régression de cette perturbation du trafic.

**2.** Procédé selon la revendication 1, **caractérisé en ce que** toutes les perturbations localisées dans un domaine défini autour de la route calculée sont surveillées.

**3.** Procédé selon la revendication 1 ou 2, **caractérisé en ce que** dans le cas d'un changement de la route recalculée par rapport à la route calculée, la centrale de trafic émet une information vers le dispositif du véhicule.

**4.** Procédé selon une des revendications 1 à 3, **caractérisé en ce que** la centrale de trafic émet de plus une modification de la route pour la position locale avec le moment de la modification d'une route calculée, vers le dispositif du véhicule.

**5.** Procédé selon une des revendications 1 à 4, **caractérisé en ce que** la route n'est recalculée que lorsqu'une perturbation du trafic ne se trouvant pas localisée sur la route calculée régresse de plus qu'une grandeur définie.

6. Procédé selon une des revendications 1 à 5, **caractérisé en ce que** les données routières sont sous la forme de données de trafic.

7. Procédé selon une des revendications 1 à 6, **caractérisé en ce que** les données routières sont sous la forme de données d'itinéraire.

8. Procédé selon la revendication 6, **caractérisé en ce qu'**en plus des informations concernant le déroulement d'une route calculée sont transmises sans fil entre le dispositif du véhicule et la centrale de trafic.

9. Procédé selon une des revendications 2 à 6 ou 8, **caractérisé en ce qu'**en plus des informations concernant le domaine défini sont transmises sans fil entre le dispositif du véhicule et la centrale de trafic.

10. Procédé selon une des revendications 1 à 9, **caractérisé en ce qu'**on recalcule au moins la partie de la route calculée que le véhicule n'a pas encore empruntée dans l'hypothèse d'une vitesse minimum.

11. Procédé selon la revendication 10, **caractérisé en ce qu'**on recalcule trois fois en utilisant trois vitesses moyennes différentes du véhicule.

12. Procédé selon une des revendications 1 à 11, **caractérisé en ce que** la ou chaque perturbation du trafic est surveillée pour au moins une durée nécessaire au véhicule pour atteindre la destination du voyage, évaluée par la centrale de trafic.

13. Procédé selon une des revendications 1 à 12, **caractérisé en ce qu'**une heure d'arrivée à destination du voyage déterminée par le véhicule est de plus transmise sans fils à partir du dispositif du véhicule vers la centrale de trafic.

14. Procédé selon une des revendications 1 à 13, **caractérisé en ce que** pour la détermination des perturbations du trafic à surveiller, on calcule dans une première étape une route $R_1$ vers la destination du voyage sans tenir compte de perturbations du trafic,
on calcule dans une deuxième étape une route $R_A$ vers la destination du voyage en tenant compte de toutes les perturbations du trafic,
dans une troisième étape on surveille toutes les perturbations du trafic sur $R_1$ et on calcule une route $R_2$ vers la destination du voyage en ne tenant compte que des perturbations du trafic déjà surveillées,
dans une quatrième étape on surveille toutes les perturbations du trafic sur la route $R_i$, $i \geq 2$ calculée précédemment et on calcule une route $R_{i+1}$ vers la destination du voyage en tenant compte des perturbations du trafic surveillées,
on répète la quatrième étape jusqu'à ce que la route $R_i$ corresponde à la route $R_A$ et on surveille toutes les perturbations du trafic le cas échéant déjà existantes sur $R_A$ dans une étape précédente.

15. Procédé selon la revendication 14, **caractérisé en ce que** le nombre de routes $R_i$ à calculer est limité à une valeur maximale définie n.

16. Procédé selon la revendication 15, **caractérisé en ce qu'**on calcule d'autres routes $R_i$.

17. Programme d'ordinateur avec des moyens de code de programme pour exécuter toutes les étapes de n'importe laquelle des revendications 1 à 16 lorsque le programme est exécuté sur un ordinateur.

18. Produit de programme d'ordinateur avec des moyens de code de programme qui sont mémorisés sur un support de données pouvant être lu par un ordinateur pour exécuter le procédé selon n'importe laquelle des revendications 1 à 16 lorsque le produit de programme est exécuté sur un ordinateur.

19. Système de guidage dynamique d'un véhicule, constitué d'au moins un dispositif du véhicule et d'une centrale de trafic comprenant

   - des moyens de réception pour des demandes sans fil de données routières de la part du dispositif du véhicule, les données routières concernant une destination de voyage du véhicule,
   - des moyens de calcul pour calculer une route vers la destination du voyage du véhicule
   - des moyens de mémorisation pour stocker la route calculée

- des moyens d'émission pour l'émission sans fil des données routières vers le dispositif du véhicule, **caractérisé en ce qu'**en plus des moyens sont prévus pour surveiller au moins une perturbation du trafic ne se trouvant pas localisée sur la route calculée et que le système est équipé de telle sorte que la route calculée est recalculée par les moyens de calculs au moins partiellement lors d'une régression de cette perturbation du trafic.

Fig. 1

Fig. 2a

Fig. 2b

Fig. 2c

Fig. 2d

Fig. 2e

$R_5 = R_A$

Fig. 2f

Fig. 3

Fig. 4

Fig. 5

**Fig. 6**

Baum-Kanten
ursprüngliche Route
Wege-Knoten
Entscheidungspunkte

**Fig. 7a**

Fig. 7b

Fig. 7c

Fig. 8

Fig. 9

**Fig. 10**

**Fig. 11**

**Fig. 12a**

Reisezeit

**Fig. 12b** $t_{min}$ $t_E$ $t_{max}$ Ankunftszeit in B

Reisezeit

**Fig. 12c** $t'_{min}$ $t_E$ $t'_{max}$ Ankunftszeit in B

Fig. 13a

Fig. 13b

Reisezeit $P \rightarrow Q$

$R_6$

$R_A$

$\Delta t$

Ankunftszeit in P

$t_{min, Fahrer}$  $t_E$  $t_{max}$  $t_{max, Fahrer}$

## Fig. 13c

Entfernung vom Startort

$P_3$

$P_2$

$v = v_{max}$

$P_1$

$v = v_{min}$

Zeit

□ $t_{min}(P_i)$  ○ $t_{max}(P_i)$

## Fig. 14

**EP 1 497 618 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19547574 A1
- EP 0838797 A1
- DE 19956108 A1
- EP 0974137 B1